# EUROPEAN PATENT SPECIFICATION

(11) **EP 3 892 391 B1**
(45) Date of publication and mention of the grant of the patent: **10.06.2026**
(21) Application number: 19894045.4
(22) Date of filing: 15.11.2019
(51) Int. Cl.: C09D 171/00, C08G 65/00, C08G 65/336, C08J 7/04, B05D 1/26, B05D 3/06, C08K 3/36, C08K 9/06

(54) **METHOD FOR FORMING COATING FILM OF PHOTOSETTING FLUOROPOLYETHER-BASED ELASTOMER COMPOSITION**
VERFAHREN ZUR HERSTELLUNG EINER BESCHICHTUNGSFOLIE AUS EINER LICHTHÄRTENDEN ELASTOMERZUSAMMENSETZUNG AUF FLUOROPOLYETHERBASIS
PROCÉDÉ DE FORMATION D'UN FILM DE REVÊTEMENT D'UNE COMPOSITION ÉLASTOMÈRE À BASE DE FLUOROPOLYÉTHER PHOTODURCISSABLE

(30) Priority: 04.12.2018 JP 2018227059
(43) Date of publication of application: 13.10.2021
(73) Proprietor: SHIN-ETSU CHEMICAL CO., LTD., Tokyo 100-0004 (JP)
(72) Inventor: MUTO Mitsuo, Annaka-shi, Gunma 379-0224 (JP); FUKUDA Kenichi, Annaka-shi, Gunma 379-0224 (JP); KOIKE Noriyuki, Annaka-shi, Gunma 379-0224 (JP); YASUJIMA Toshihiko, Tokyo 100-0004 (JP); TANASE Tomoki, Tokyo 100-0004 (JP)
(74) Representative: Angerhausen, Christoph
(86) International application number: PCT/JP2019/044819
(87) International publication number: WO 2020/116125

(56) References cited:
- JP-A- 2000 344 872
- JP-A- 2001 266 420
- JP-A- 2005 205 361
- JP-A- 2012 120 961
- JP-A- 2013 063 391
- JP-A- 2014 210 831
- JP-A- 2017 039 810
- JP-A- H11 100 550

## Description

### TECHNICAL FIELD

The present invention relates to a method for forming a coating film of a photocurable fluoropolyether-based elastomer composition curable when irradiated with a light, particularly an ultraviolet light; and is to provide a coating film forming method capable of forming a uniform coating film of a cured product even in a dark portion, deep portion and base material interface (resin base material interface in particular) of a base material to which the composition is to be applied.

### BACKGROUND ART

Conventionally, a photocurable fluoropolyether-based gel composition or rubber composition is known as a material capable of yielding, at a normal temperature and for a short period of time, a gel or rubber cured product with an excellent balance(s) between, for example, a heat resistance, low-temperature property, chemical resistance, solvent resistance and oil resistance when irradiated with a light, especially an ultraviolet light (Patent documents 1 and 2).

Further, it is also known that a photocurable fluoropolyether-based elastomer composition can be utilized as a material with a low-temperature curability and an adhesiveness by previously applying a silane-based primer to a base material (Patent document 3).

In a curing step of the above composition(s), since heating is not required, it is possible to save spaces for and reduce costs in installing production equipments as no heating furnace is required, and then shift from batch production to continuous production. Thus, the above composition(s) are useful materials even from the perspective of improvements in productivity, such as an improvement in production efficiency and a reduction in production cost accordingly.

Further, since the above composition(s) are not subjected to a curing inhibition incurred by oxygen, which is often a problem in the case of an acrylic ultraviolet curable material; and a curing inhibition incurred by water, which is often a problem in the case of an epoxy ultraviolet curable material, cured products can be easily produced as no restrictions shall be imposed by, for example, handling operations and facility environments.

Further, since a curing speed of the above composition(s) after ultraviolet irradiation can also be controlled by an ultraviolet irradiation dose and an environmental temperature, even in an operation where, for example, ultraviolet irradiation is performed on the composition mounted on a base material before attaching such base material to another base material, it is possible to secure a sufficient operation time by adjusting the curing speed. Further, as for the above composition(s), a curing reaction can be promoted, and a curing time can also be shortened, by performing heating after ultraviolet irradiation.

Moreover, since the above composition(s) also have a dark portion curability and a deep portion curability, even in a case where a base material to which the composition is to be applied structurally and partially has a (shady) portion(s) not exposed to lights, or in a case where a thick film is to be cured by application, a sufficient cured product can still be obtained.

### PRIOR ART DOCUMENTS

### Patent documents

Patent document 1: Japanese Patent No. 6020327
Patent document 2: JP-A-2009-149782
Patent document 3: JP-A-2017-039810
JP-A-2017-039810 provides a method which can bond a photocurable fluoropolyether elastomer composition to a base material at low temperature and in a short time including coating a base material with a silane primer composition, coating the formed primer film with a photocurable fluoropolyether elastomer composition, irradiating it with light, allowing it to stand at 10-120 °C, and bonding the base material and the elastomer together.

### SUMMARY OF THE INVENTION

### Problems to be solved by the invention

However, one problem with the above photocurable fluoropolyether-based gel, rubber and elastomer compositions is that while these compositions have a dark portion curability and a deep portion curability, they may be cured in an insufficient manner or require a long period of time to be cured if, for example, the area of a dark portion is larger than that of a bright portion, and a film thickness is large, or if the composition does not contain a light-scattering additive such as silica. Another problem with the above photocurable fluoropolyether-based gel, rubber and elastomer compositions is that when attaching base materials together, after applying the composition to a base material and then performing ultraviolet irradiation on such composition, the base material has to be attached to another base material. Further, there has also been a problem that when applying the composition to a base material, particularly a resin base material and then performing photocuring, curing will take place in an insufficient manner in a base material interface (resin base material interface in particular) as a result of being subjected to a curing inhibition from the base material.

### Means to solve the problems

The inventors of the present invention diligently conducted a series of studies to solve the above problems, and completed the invention as follows. That is, the inventors found that a sufficiently cured and uniform cured product can be obtained even in dark portions, deep portions and an interface of a base material (resin base material in particular), not by performing light irradiation on a photocurable fluoropolyether-based elastomer composition that has already been applied to a base material, but by applying a photocurable fluoropolyether-based elastomer composition that has previously been irradiated with a light to a base material. In short, the present invention is to provide the flowing method for forming a coating film of a photocurable fluoropolyether-based elastomer composition.
[1] A coating film forming method for forming a coating film of a photocurable fluoropolyether-based elastomer composition, comprising:
   a step of applying a light-irradiated photocurable fluoropolyether-based elastomer composition to a surface of a base material, wherein the photocurable fluoropolyether-based elastomer composition is applied to the surface of the base material while performing light irradiation on the photocurable fluoropolyether-based elastomer composition,
   wherein light irradiation is performed with an ultraviolet light whose maximum peak wavelength is in a range of 300 to 400 nm, where an irradiation dose is 100 mJ/cm² to 100,000 mJ/cm² in terms of cumulative intensity,
   wherein the photocurable fluoropolyether-based elastomer composition comprises:
      (A) 100 parts by mass of a linear polyfluoro compound having at least two alkenyl groups in one molecule, and having a perfluoropolyether structure in a main chain;
      (B) a fluorine-containing organo hydrogen siloxane having at least two silicon atom-bonded hydrogen atoms (SiH groups) in one molecule, the component (B) being in an amount where the SiH groups are present in an amount of 0.5 to 3.0 mol per 1 mol of the alkenyl groups in the component (A); and
      (C) a photoactive hydrosilylation reaction metal catalyst, the component (C) being in an amount of 0.1 to 500 ppm in terms of a mass of metal atoms with respect to the component (A).
[2] The coating film forming method according to [1], wherein the photocurable fluoropolyether-based elastomer composition further comprises, as a component (D),
   (D) a polyfluoromonoalkenyl compound having one alkenyl group in one molecule and having a perfluoropolyether structure in a main chain, the component (D) being in an amount of 1 to 300 parts by mass per 100 parts by mass of the component (A).
[3] The coating film forming method according to [1] or [2], wherein the photocurable fluoropolyether-based elastomer composition further comprises, as a component (E),
   (E) at least one nonfunctional perfluoropolyether compound selected from the group consisting of compounds represented by the following general formulae (1) to (3), the component (E) being in an amount of 0 to 150 parts by mass per a total of 100 parts by mass of the components (A) and (B):

   A-O-(CF₂CF₂CF₂O)ₐ-A (1)

   wherein A represents a group expressed by a formula C_{b}F_{2b+1}- (b represents an integer of 1 to 3), a represents an integer of 1 to 500;

   A-O-(CF₂O)_{c}-(CF₂CF₂O)_{d}-A (2)

   wherein A is defined as above, each of c and d represents an integer of 1 to 300; 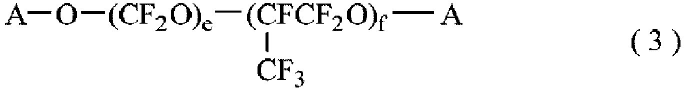 wherein A is defined as above, each of e and f represents an integer of 1 to 300.
[4] The coating film forming method according to any one of [1] to [3], wherein the photocurable fluoropolyether-based elastomer composition further comprises, as a component (F),
   (F) a hydrophobic silica powder having a BET specific surface area of not smaller than 0.1 m²/g, the component (F) being in an amount of 0.1 to 40 parts by mass per 100 parts by mass of the component (A).
[5] The coating film forming method according to any one of [1] to [4], wherein the photocurable fluoropolyether-based elastomer composition further comprises, as a component (G), a reaction control agent for hydrosilylation reaction.
[6] The coating film forming method according to any one of [1] to [5], wherein the component (A) is a linear polyfluoro compound represented by the following formula (I):

   CH₂=CH-(X)_{g}-Rf¹-(X')_{g}-CH=CH₂ (I)

   wherein X represents -CH₂-, -CH₂O-, -CH₂OCH₂- or -Y-NR¹-CO-; X' represents -CH₂-, - OCH₂-, -CH₂OCH₂- or -CO-NR²-Y'-; g independently represents 0 or 1; Rf¹ represents a divalent perfluoropolyether group represented by a formula (i) or (ii),
   wherein Y represents -CH₂-, -Si(CH₃)₂CH₂CH₂CH₂-, -Si(CH₃)(CH=CH₂)CH₂CH₂CH₂-, - Si(CH=CH₂)₂CH₂CH₂CH₂- or an o-, m- or p-silylphenylene group represented by a structural formula (Z); R¹ represents a hydrogen atom, or a substituted or unsubstituted monovalent hydrocarbon group; Y' represents -CH₂-, -CH₂CH₂CH₂Si(CH₃)₂-, - CH₂CH₂CH₂Si(CH₃)(CH=CH₂)-, -CH₂CH₂CH₂Si(CH=CH₂)₂- or an o-, m- or p-silylphenylene group represented by a structural formula (Z'); R² represents a hydrogen atom, or a substituted or unsubstituted monovalent hydrocarbon group,
   the formulae (i), (ii), (Z) and (Z') being the following formulae: 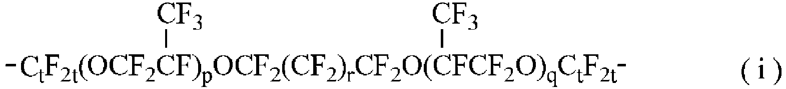
   wherein each of p and q represents 0 or an integer of 1 to 150, and an average of a sum of p and q is 2 to 200; r represents an integer of 0 to 6; t represents 2 or 3, 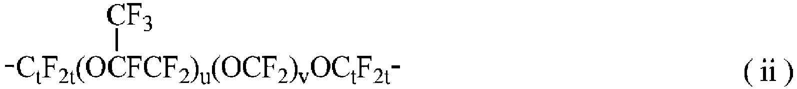
   wherein u represents an integer of 1 to 200; v represents an integer of 1 to 50; t represents 2 or 3, 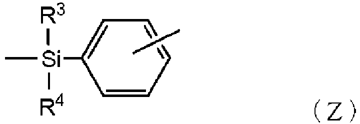
   wherein each of R³ and R⁴ independently represents -CH₃ or -CH=CH₂, 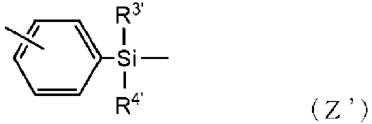
   wherein each of R^{3'} and R^{4'} independently represents -CH₃ or -CH=CH₂.
[7] The coating film forming method according to any one of [1] to [6], wherein the fluorine-containing organo hydrogen siloxane as the component (B) has, in one molecule, at least one monovalent perfluoroalkyl group, monovalent perfluorooxyalkyl group, divalent perfluoroalkylene group and/or divalent perfluorooxyalkylene group.
[8] The coating film forming method according to any one of [1] to [7], wherein the photoactive hydrosilylation reaction metal catalyst as the component (C) is a (η⁵-cyclopentadienyl)tri(α-alkyl)platinum (IV) complex.
[9] The coating film forming method according to any one of [1] to [8], wherein the photocurable fluoropolyether-based elastomer composition is contained in a container having a nozzle portion, and light irradiation is performed on the composition through the nozzle portion.

### Effects of the invention

According to the method of the present invention for forming a coating film of a photocurable fluoropolyether-based elastomer composition, a uniform coating film of a cured product of the composition can be formed even in dark portions, deep portions and an interface of a base material (resin base material in particular), and the coating film of the cured product is superior in, for example, heat resistance, low temperature property, chemical resistance, solvent resistance and oil resistance.

### BRIEF DESCRIPTION OF THE DRAWINGS

FIG.1 is a schematic diagram showing a method for applying a composition after performing light irradiation on the composition contained in a syringe with a plurality of light source lamps.
FIG.2 is a schematic diagram showing a method for applying a composition after performing light irradiation on the composition contained in a petri dish.
FIG.3 is a schematic diagram showing a method for applying a composition while performing light irradiation on the composition at a straight nozzle portion.
FIG.4 is a schematic diagram showing a method for applying a composition while performing light irradiation on the composition at a folded nozzle portion.
FIG.5 is a schematic diagram showing a container having a dark portion, the container being prepared by covering an end of an aluminum petri dish with an aluminum foil.
FIG.6 is a schematic diagram showing a method for applying a composition to an inner side of the aluminum petri dish shown in FIG.5 while performing light irradiation on the composition through the nozzle.
FIG.7 is a schematic diagram showing a method for performing light irradiation from above after applying a composition to the inner side of the petri dish.
FIG.8 is a schematic diagram showing a method for applying a composition to an inner side of a dark portion-free aluminum petri dish at a thickness of 10 mm while performing light irradiation on the composition through the nozzle.
FIG.9 is a schematic diagram showing a method for performing light irradiation from above after applying a composition to an inner side of an aluminum petri dish at the thickness of 10 mm.
FIG. 10 is a graph showing results obtained by studying changes in viscosity over time of compositions in reference examples 1 to 3 when stored in a tightly sealed light-blocking bottle(s) at 40°C for 30 days.
FIG.11 is a graph showing results obtained by measuring an elastic modulus at 25°C over time as a result of applying a composition to an aluminum base material at a thickness of 1.0 mm and performing light irradiation.
FIG.12 is a graph showing results obtained by measuring an elastic modulus at 25°C over time as a result of applying a composition (except reference example 7) to a polyolefin base material at a thickness of 1.0 mm.
FIG. 13 is a graph showing results obtained by measuring an elastic modulus at 25°C over time as a result of applying a composition (except reference example 9) to a PPS base material at a thickness of 1.0 mm.
FIG.14 is a graph showing results obtained by measuring an elastic modulus at 25°C over time as a result of applying a composition (except reference example 10) to a PET base material at a thickness of 1.0 mm.

### MODE FOR CARRYING OUT THE INVENTION

The present invention is described in detail hereunder.

### [Condition for performing light irradiation on photocurable fluoropolyether-based elastomer composition]

First of all, a condition(s) for performing light irradiation on a photocurable fluoropolyether-based elastomer composition used in the present invention are described.

The photocurable fluoropolyether-based elastomer composition is capable of being cured by light irradiation. When curing, an irradiation light is such a light where a maximum peak wavelength in an emission spectrum is in a region of 300 to 400 nm, and where an irradiance of each wavelength in a wavelength region shorter than 300 nm is as high as or lower than 5%, preferably as high as or lower than 1%, more preferably as high as or lower than 0.1% of the irradiance at the above maximum peak wavelength i.e. the closer the irradiance of each wavelength in the wavelength region shorter than 300 nm reaches 0, the more preferable it is. If irradiating the composition with a light having a wavelength that is in the wavelength region shorter than 300 nm and whose irradiance is higher than 5% of the irradiance at the above maximum peak wavelength, a satisfactory cured product may not be obtained as decomposition of a polymer end group(s) may occur, or part of a catalyst may decompose as well.

An ultraviolet irradiation dose with which the photocurable fluoropolyether-based elastomer composition can be favorably cured is 100 mJ/cm² to 100,000 mJ/cm², preferably 1,000 mJ/cm² to 10,000 mJ/cm², more preferably 2,000 to 10,000 mJ/cm², in terms of cumulative intensity. When the ultraviolet irradiation dose (cumulative intensity) is smaller than the above range(s), a satisfactory cured product may not be obtained, or it may require a long period of time for curing, for example, as an energy sufficient to activate a photoactive hydrosilylation reaction catalyst in the composition cannot be achieved. Further, when the ultraviolet irradiation dose (cumulative intensity) is greater than the above range(s), a satisfactory cured product may not be obtained, as, for example, decomposition of a polymer end group(s) may occur, or part of a catalyst may be deactivated, as a result of having the composition being irradiated with a quantity of energy more than necessary.

Ultraviolet irradiation may be performed either with a light having multiple emission spectra or with a light having a single emission spectrum. Further, a single emission spectrum may be that having a broad spectrum in the region of 300 nm to 400 nm. A light having a single emission spectrum is a light having a peak (i.e. maximum peak wavelength) in a range of 300 nm to 400 nm, preferably in a range of 350 nm to 380 nm. Examples of a light source for emitting such light include ultraviolet-emitting semiconductor element light sources such as an ultraviolet-emitting diode (ultraviolet LED) and an ultraviolet-emitting semiconductor laser.

Examples of a light source for emitting a light having multiple emission spectra include lamps such as a metal halide lamp, a xenon lamp, a carbon-arc lamp, a chemical lamp, a sodium lamp, a low-pressure mercury lamp, a high-pressure mercury lamp and a super high-pressure mercury lamp; a gas laser such as a nitrogen laser; a liquid laser such as an organic dye solution laser; and a solid-state laser with rare-earth ions being contained in an inorganic single crystal(s).

**In** an emission spectrum of a light of any of the above light sources, when a peak is present in the wavelength region shorter than 300 nm, or when a wavelength having an irradiance higher than 5% of the irradiance at a maximum peak wavelength in the emission spectrum is present in the wavelength region shorter than 300 nm (e.g. when the emission spectrum is broad throughout the wide wavelength region), lights having wavelengths in the wavelength region shorter than 300 nm will be removed by an optical filter. In this way, the irradiance of each wavelength in the wavelength region shorter than 300 nm can be controlled to as high as or lower than 5%, preferably as high as or lower than 1%, more preferably as high as or lower than 0.1% of the irradiance at the maximum peak wavelength, or even more preferably 0% of the irradiance at the maximum peak wavelength. Here, when there are multiple peaks in the wavelength region of 300 nm to 400 nm in an emission spectrum, a peak wavelength exhibiting the largest absorbance is regarded as the maximum peak wavelength. There are no particular restrictions on the optical filter as long as it is capable of cutting wavelengths shorter than 300 nm; a known optical filter may be used. For example, there may be used a 365 nm bandpass filter. Here, ultraviolet irradiance and spectral distribution can be measured by a spectroradiometer such as USR-45D (by Ushio Inc.)

While there are no particular restrictions on a light irradiation device, there may be used, for example, irradiation devices such as a spot-type irradiation device, a surface-type irradiation device, a line-type irradiation device and a conveyor-type irradiation device.

As a guide of a light irradiation period for curing the photocurable fluoropolyether-based elastomer composition, though depending on a light source irradiance, the light irradiation period may, for example, be 1 to 300 sec, preferably 10 to 200 sec, more preferably 20 to 150 sec; after 1 to 60 min, particularly 5 to 30 min of light irradiation, the photocurable composition will lose fluidity such that a gel-like or rubber-like elastic body (cured product) can be obtained.

### [Method for forming coating film of photocurable fluoropolyether-based elastomer composition]

Next, a method for forming a coating film of the photocurable fluoropolyether-based elastomer composition is described.

The coating film forming method of the present invention is characterized by applying the light-irradiated composition to the surface of a base material,
where the photocurable fluoropolyether-based elastomer composition is applied to the surface of a base material while performing light irradiation on the photocurable fluoropolyether-based elastomer composition.

According to a reference method after finishing performing light irradiation on the photocurable fluoropolyether-based elastomer composition, the photocurable fluoropolyether-based elastomer composition is then applied to the surface of a base material

This reference method is characterized by applying the photocurable fluoropolyether-based elastomer composition to the surface of a base material after finishing performing light irradiation on such photocurable fluoropolyether-based elastomer composition. In this method, light irradiation may be performed on the composition in a container, and the light-irradiated composition may then be applied directly or moved to a different container before applying the same. In either method, a container with no or a small impact of curing inhibition is selected as the container used at the time of performing light irradiation.

Examples of a container with no impact of curing inhibition include a glass or metallic container. As for a resin container, though there may be a possibility of curing inhibition, since the impacts thereof may vary depending on, for example, the type, manufacturer and grade of the resin, a resin container can be favorably used if the container has been previously confirmed to have no or a small impact of curing inhibition.

As a shape of the container, there may be appropriately selected those that are suitable for use, such as the shape of a petri dish, a pan, a tray, a bottle, a can, a syringe or a cartridge. A syringe or a cartridge can be favorably used if an area to which the composition is to be applied is small or if an application quantity needs to be controlled.

If light irradiation is performed on the composition through a container, it is required that the container used have a light transparency. Specific examples of a light transmissive material include transparent materials such as a glass, an acrylic resin, a polycarbonate resin, a polypropylene resin and a polyethylene terephthalate (PET) resin.

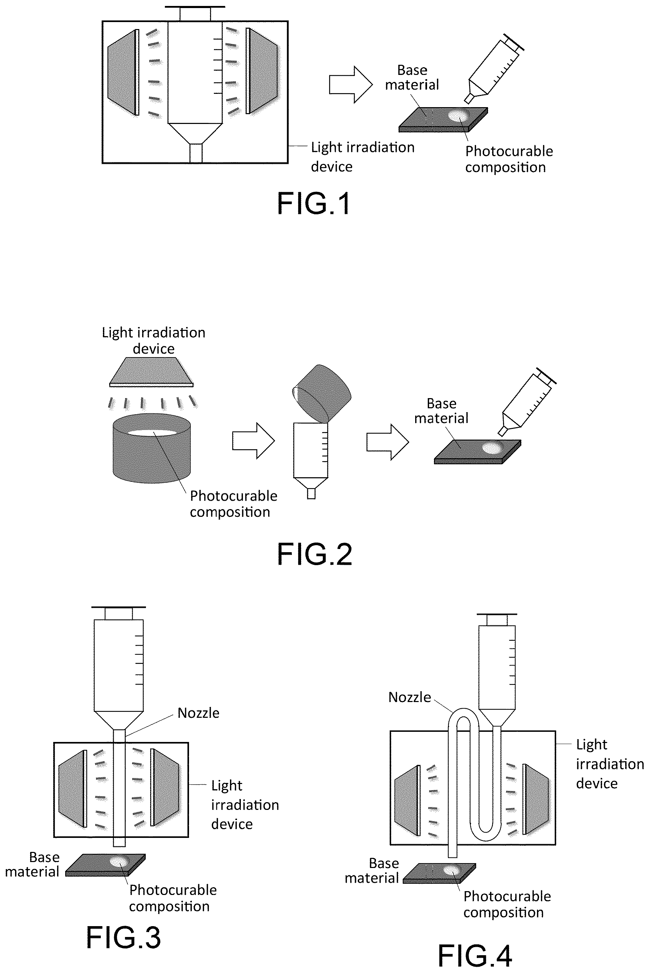

It is preferred that the thickness of the composition at the time of being subjected to light irradiation be small, because a thinner composition will allow the lights to be evenly distributed throughout the composition so that a light irradiation efficiency will be improved. For example, when performing light irradiation with, for example, a petri dish, pan or tray being filled with the composition (FIG.2), a curing speed can be increased if light irradiation is performed on a thinner composition. Similarly, even when using a syringe or cartridge filled with the composition (FIG. 1), preferred are, for example, a method where light irradiation is performed on the composition with the aid of a small diameter syringe; or a method where light irradiation is once performed on a thin layer of the composition in a petri dish, followed by putting the light-irradiated composition into a syringe. This is because, with these methods, the light irradiation efficiency will be improved so that a favorable curing speed can be achieved.

As another method for improving the efficiency of light irradiation on the composition, there may be employed, for example, a method of performing light irradiation over a wide range on the container filled with the composition; a method of performing light irradiation by installing a plurality of light source lamps; or a method of using a reflective mirror.

An application method(s) according to this reference method are, for example, shown in FIG.1 and FIG.2.

In the method according to the present invention the photocurable fluoropolyether-based elastomer composition is applied to the surface of a base material while performing light irradiation on the photocurable fluoropolyether-based elastomer composition

This method is a method where the photocurable fluoropolyether-based elastomer composition is to be applied to the surface of a base material while performing light irradiation on the photocurable composition, preferably a method where the composition is to be applied while performing light irradiation on a nozzle portion of a container filled with such composition. This method differs from the reference method in that a portion(s) of the composition that are to be subjected to light irradiation are limited to those that are used for application immediately thereafter. Thus, for example, in the case of the reference method, the composition in the container that has been subjected to light irradiation has to be discarded unless all of it has been used; however, in the case of the method according to the invention, since the light irradiation site is limited to the nozzle portion, the composition can be prevented from being discarded. Even when the composition has hardened at the nozzle portion, the rest of the composition in the container can still be used thereafter simply by replacing the nozzle.

As a method for performing light irradiation on the composition at the nozzle portion attached to a container, light irradiation may be performed on the composition through the nozzle; in such case, it is required that the material of the nozzle have a light transparency. Examples of a light transmissive material include those listed above; if necessary, such light transmissive material may be processed before use.

Here, in this method, it is preferred that the container be, for example, an extrudable syringe.

As an example(s) of processing the nozzle, described hereunder are processing with regard to the thickness, length and shape of the nozzle. As for thickness, a thinner nozzle is preferred because the lights can be easily distributed throughout the composition. As for length, a light irradiation dose delivered to the composition can be adjusted even by adjusting the path length of a nozzle to be subjected to light irradiation. That is, if the light irradiation dose delivered to the composition is to be increased, the composition can be subjected to light irradiation for a longer period of time by employing a longer nozzle such that lights can be delivered to the composition while the composition is passing through the nozzle. Further, as for shape, by employing, for example, a folded shape or a looped shape, a light irradiation area can be narrowed even with the same length of the nozzle, which is effective in downsizing an applicator.

As a light source lamp(s), there may be used, for example, a light source lamp capable of performing light irradiation over a wide range, a number of lamps combined together, or a light source lamp equipped with a reflective mirror, thereby improving the light irradiation efficiency, and thus promoting a curing reaction.

An application method(s) according to this method are, for example, shown in FIG.3 and FIG.4.

The coating film forming method of the present invention can be used with regard to resin base materials that could have been subjected to curing inhibition under a conventional coating film forming method (e.g. organic resin base materials such as a polyphenylene sulfide (PPS) resin base material, an epoxy resin base material, a phenolic resin base material, a polyethylene terephthalate (PET) resin base material, a melamine resin base material, a urea resin base material, a polyester resin base material, a polyurethane resin base material, a polyimide resin base material, a polyamide resin base material, a polyolefin resin base material, a polyvinyl chloride resin base material and an ABS resin base material).

In the coating film forming method of the present invention, as a way of applying the light-irradiated composition to a base material, the composition may be applied via, for example, spraying or dipping. There, a method for forming a coating film may be appropriately selected in accordance with the viscosity of the composition, or the viscosity of the composition may be appropriately diluted and adjusted by a solvent in accordance with a method for forming a coating film.

Examples of a solvent used for dilution include general organic solvents such as toluene, ethyl acetate, methanol, 2-propanol, n-hexane and methylethylketone; and fluorine-based organic solvents such as 1,2-bis(trifluoromethyl)benzene, 1,3-bis(trifluoromethyl)benzene, 1,4-bis(trifluoromethyl)benzene, 1,3,5-tris(trifluoromethyl)benzene, 1,3-bis(trifluoromethyl)cyclohexane, 1,1,1,2,2,3,3,4,4,5,5,6,6-tridecafluorooctane, dichloropentafluoropropane, ethyl nonafluorobutyl ether, ethyl nonafluoroisobutyl ether, methyl perfluoroisobutyl ether and methyl perfluorobutyl ether. In terms of, for example, a solubility to the composition, a volatility of a solvent and a leveling property to a base material, any one of the above organic solvents may be used alone, or two or more of them may be appropriately selected and used in combination as a mixed solvent.

### [Photocurable fluoropolyether-based elastomer composition]

Next, each component of the photocurable fluoropolyether-based elastomer composition used in the present invention is described in detail hereunder.

### [Component (A)]

A component (A) in the photocurable fluoropolyether-based elastomer composition is a linear polyfluoro compound having at least two alkenyl groups in one molecule. Here, it is preferred that the number of the alkenyl groups per each molecule be 2 to 30, more preferably 2 to 10, particularly preferably 2 to 6.

In the component (A), the expression "linear" refers to a state where repeating units that are comprised of perfluorooxyalkylene and compose a perfluoropolyether structure in a main chain are bonded to one another in a linear manner; each of the repeating units themselves may be a branched perfluorooxyalkylene unit (e.g. [-CF₂CF(CF₃)O-] unit, [-CF(CF₃)O-] unit).

As the component (A), particularly preferred is a linear polyfluoro compound having branched structures in perfluorooxyalkylene repeating units in a main chain, as represented by the following formula (I)
[Chemical formula 9]

CH₂=CH-(X)_{g}-Rf¹-(X')_{g}-CH=CH₂ (I)

[In the formula (I), X represents -CH₂-, -CH₂O-, -CH₂OCH₂- or -Y-NR¹-CO-; X' represents - CH₂-, -OCH₂-, -CH₂OCH₂- or -CO-NR²-Y'-; g independently represents 0 or 1; Rf¹ represents a divalent perfluoropolyether group represented by a formula (i) or (ii).]
(Here, Y represents -CH₂-, -Si(CH₃)₂CH₂CH₂CH₂-, -Si(CH₃)(CH=CH₂)CH₂CH₂CH₂-, - Si(CH=CH₂)₂CH₂CH₂CH₂- or an o-, m- or p-silylphenylene group represented by a structural formula (Z); R¹ represents a hydrogen atom, or a substituted or unsubstituted monovalent hydrocarbon group; Y' represents -CH₂-, -CH₂CH₂CH₂Si(CH₃)₂-, - CH₂CH₂CH₂Si(CH₃)(CH=CH₂)-, -CH₂CH₂CH₂Si(CH=CH₂)₂- or an o-, m- or p-silylphenylene group represented by a structural formula (Z'); R² represents a hydrogen atom, or a substituted or unsubstituted monovalent hydrocarbon group.)

The formulae (Z), (Z'), (i) and (ii) are as follows. 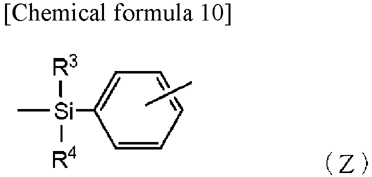 (In the formula (Z), each of R³ and R⁴ independently represents -CH₃ or -CH=CH₂.) 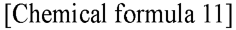 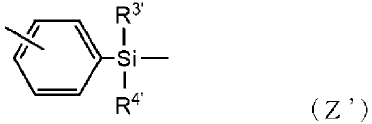 (In the formula (Z'), each of R^{3'} and R^{4'} independently represents -CH₃ or -CH=CH₂.) 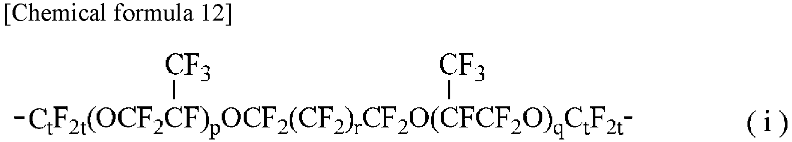 (In the formula (i), each of p and q represents 0 or an integer of 1 to 150, and an average of a sum of p and q is 2 to 200; r represents an integer of 0 to 6; t represents 2 or 3.) 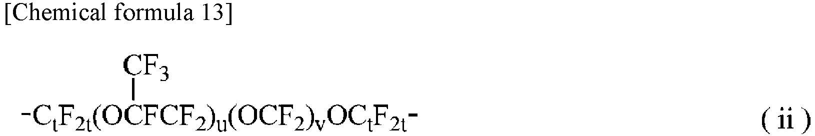 (In the formula (ii), u represents an integer of 1 to 200; v represents an integer of 1 to 50; t represents 2 or 3.)

Here, as R¹ and R², preferred is a hydrogen atom or a monovalent hydrocarbon group having 1 to 12, particularly 1 to 10 carbon atoms. Specific examples of such monovalent hydrocarbon group include alkyl groups such as a methyl group, an ethyl group, a propyl group, a butyl group, a hexyl group, a cyclohexyl group and an octyl group; aryl groups such as a phenyl group and a tolyl group; aralkyl groups such as a benzyl group and a phenylethyl group; and monovalent hydrocarbon groups obtained by substituting part of or all the hydrogen atoms in these groups with halogen atoms such as fluorine atoms.

Here, Rf¹ in the formula (I) represents a divalent perfluoropolyether group; a group represented by the following formula (i) or (ii) is preferred. 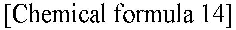 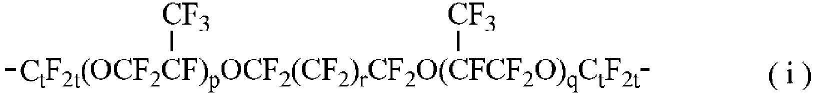 (In the formula (i), each of p and q represents 0 or an integer of 1 to 150, preferably an integer of 10 to 150; and an average of a sum of p and q is 2 to 200, preferably 20 to 160. Further, r represents an integer of 0 to 6, preferably an integer of 0 to 4; t represents 2 or 3.) 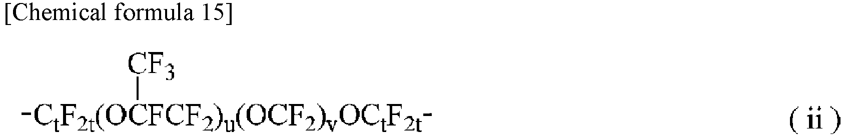 (In the formula (ii), u represents an integer of 1 to 200, preferably an integer of 20 to 160; v represents an integer of 1 to 50, preferably an integer of 5 to 40; t represents 2 or 3.)

Preferable examples of Rf¹ include the following three groups ((i-1), (i-2) and (ii-1)). Among these groups, a divalent group having a structure represented by the first formula is particularly preferred. 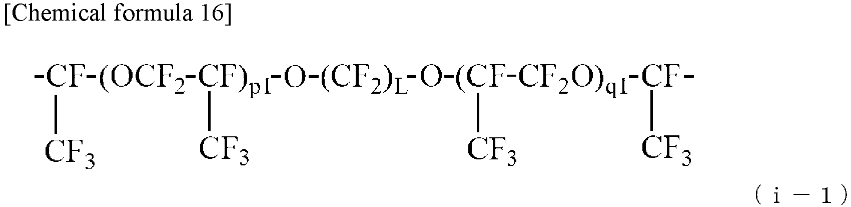 (In the formula (i-1), each of p1 and q1 represents an integer of 1 to 150, and p1+q1 (average)=2 to 200. L represents an integer of 2 to 6.) 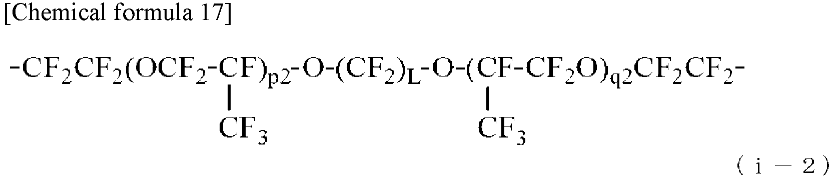 (In the formula (i-2), each of p2 and q2 represents an integer of 1 to 150, and p2+q2 (average)=2 to 200. L represents an integer of 2 to 6.) 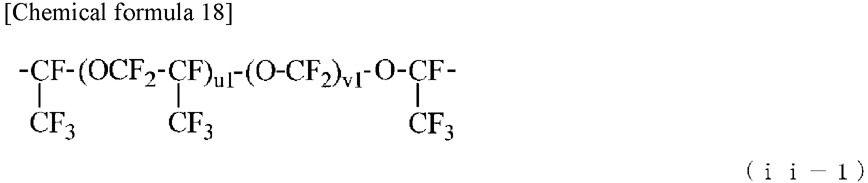 (In the formula (ii-1), u1 represents an integer of 1 to 200; v1 represents an integer of 1 to 50.)

A preferable example of the component (A) may be a compound represented by the following formula (II). 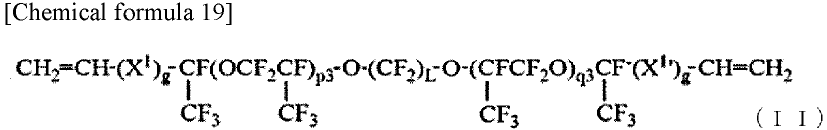 [In the formula (II), X¹ represents a group expressed by -CH₂-, -CH₂O-, -CH₂OCH₂- or -Y-NR¹¹-CO- (Y is defined as above; R¹¹ represents a hydrogen atom, a methyl group, a phenyl group or an allyl group); X^{1'} represents a group expressed by -CH₂-, -OCH₂-, -CH₂OCH₂- or - CO-NR¹²-Y'- (R¹² represents what R¹¹ represents; Y' is defined as above); g independently represents 0 or 1; L represents an integer of 2 to 6; each of p3 and q3 independently represents an integer of 1 to 150; p3+q3 (average)=2 to 200.]

Specific examples of the linear polyfluoro compound represented by the formula (I) include those expressed by the following formulae. 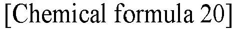 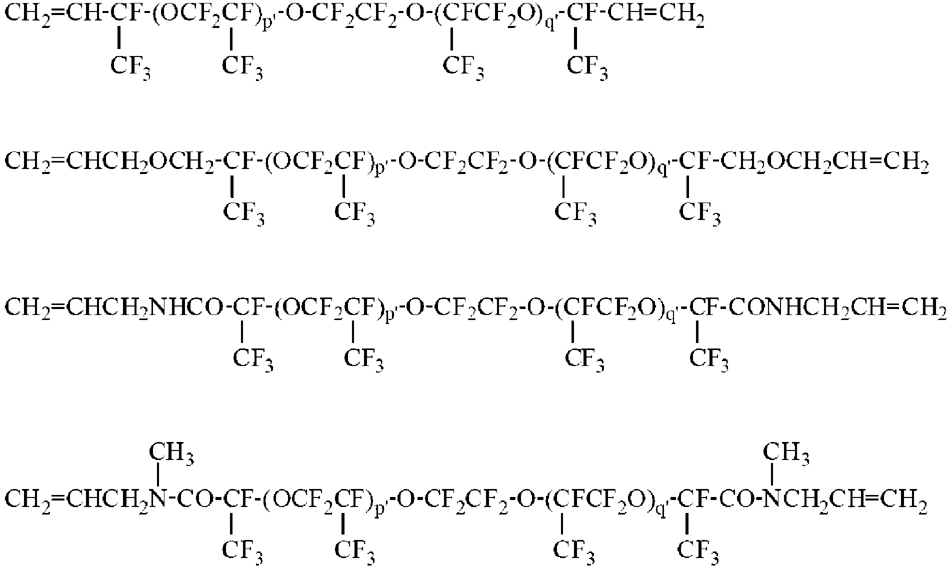 (In the above formulae, each of p' and q' represents an integer of 1 to 150, and p'+q' (average)=6 to 200.) 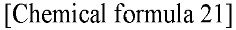 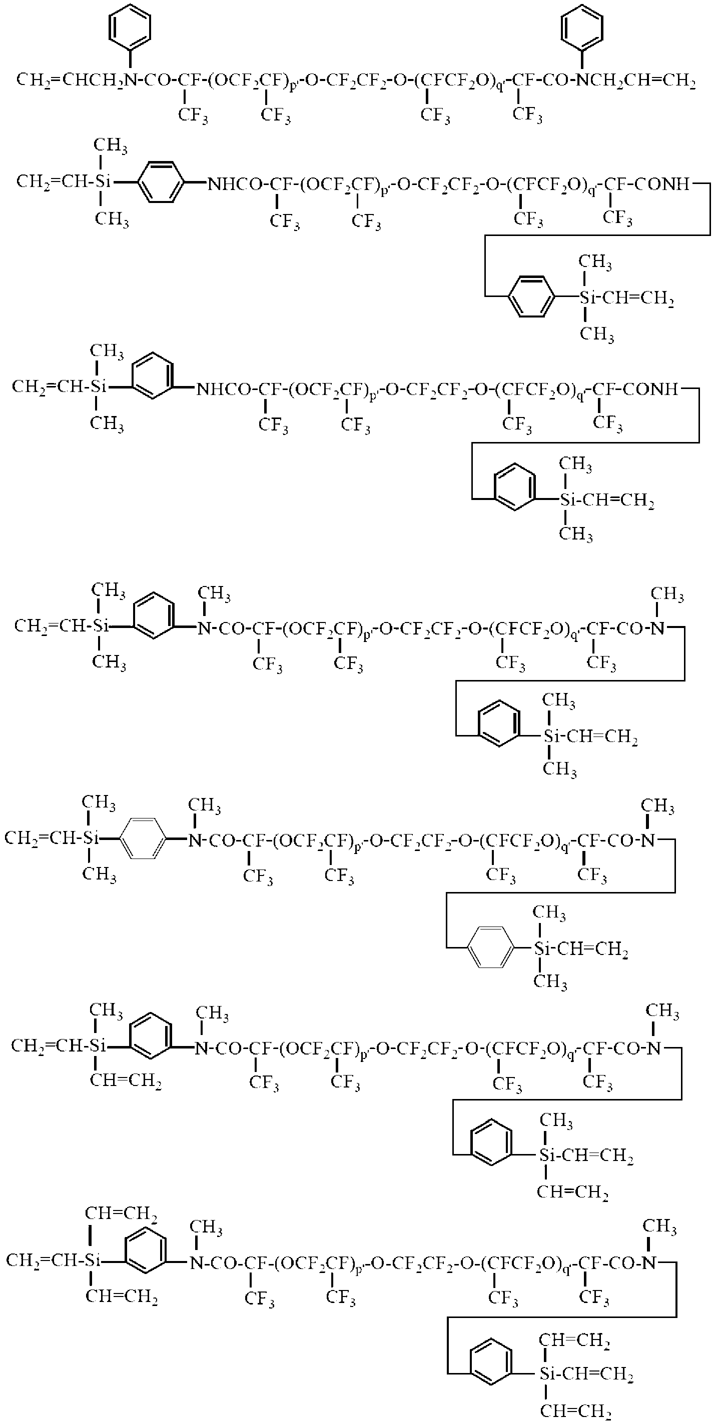 (In the above formulae, each of p' and q' represents an integer of 1 to 150, and p'+q' (average)=6 to 200.) 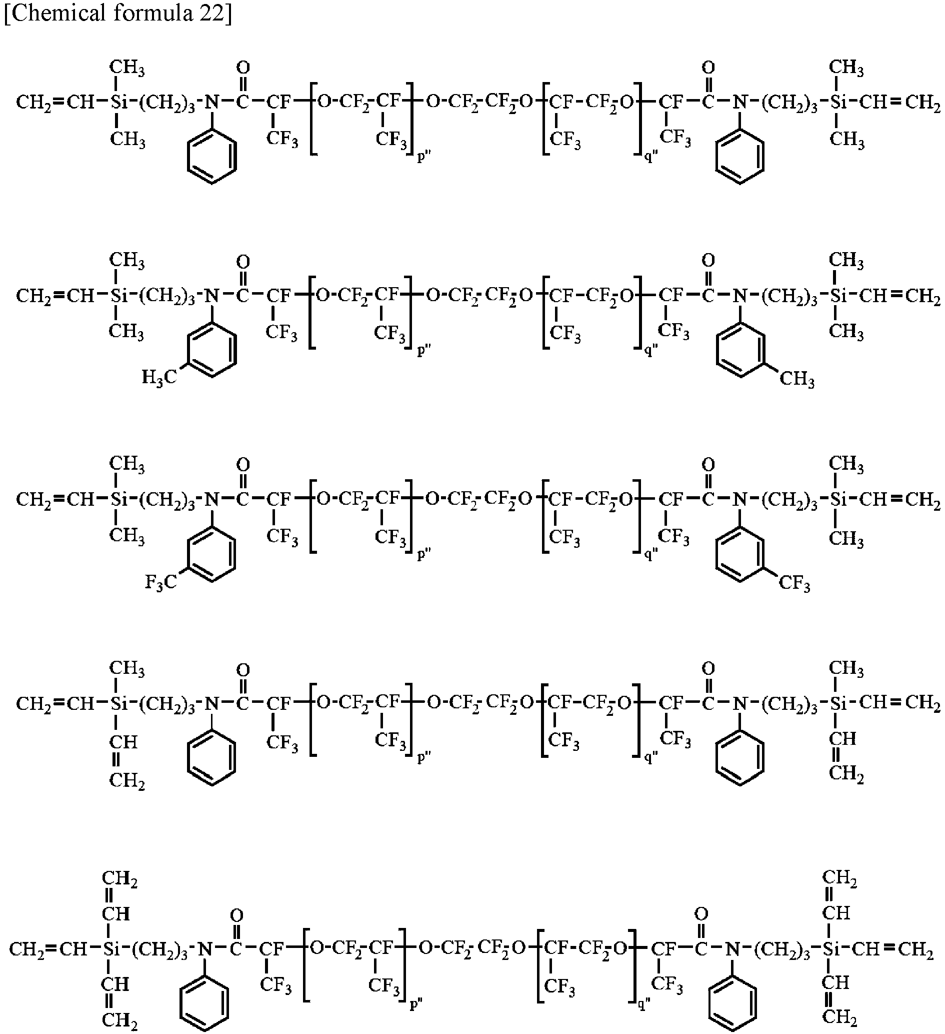 (In the above formulae, p" and q" each represent an integer of 1 to 150, and are numbers satisfying p"+q"=2 to 200.)

An alkenyl group content in the linear polyfluoro compound represented by the formula (I) is preferably 0.00005 to 0.00050 mol/g, more preferably 0.00007 to 0.00040 mol/g. When the alkenyl group content in the linear polyfluoro compound is excessively small, the physical strength of the cured product may be impaired, and a cured product may not be obtained. Further, when the alkenyl group content is excessively large, the cured product obtained may be brittle and break easily.

Here, it is preferred that the viscosity (23°C) of the linear polyfluoro compound represented by the formula (I) be in a range of 5 to 100,000 mPa·s, preferably 500 to 50,000 mPa·s, more preferably 1,000 to 20,000 mPa·s. It is desirable that a linear polyfluoro compound whose viscosity is within these ranges be used in the photocurable composition, and that this composition be then used for, for example, sealing, potting, coating or impregnation, because the cured product will have adequate physical properties. In accordance with an intended use, selected is a linear polyfluoro compound of the formula (I) that has the most appropriate viscosity. There, a polymer with a low viscosity and a polymer with a high viscosity may be mixed together, followed by adjusting the viscosity of the mixture to a desired viscosity before use. Here, the viscosity can be measured by a rotary viscometer (e.g. BL type, BH type, BS type, cone-plate type or rheometer); particularly, the viscosity (23°C) of the linear polyfluoro compound represented by the general formula (I) or (II) can be obtained via a viscosity measurement procedure provided in JIS K7117-1.

Further, a polymerization degree (or molecular weight) of the linear polyfluoro compound that is reflected by, for example, the number of the repeating perfluorooxyalkylene units composing the perfluoropolyether structure as the main chain, can, for example, be obtained as a number average polymerization degree (or number average molecular weight) in terms of polystyrene in a gel permeation chromatography (GPC) analysis using a fluorine-based solvent as a developing solvent.

Further, in the present invention, in order to adjust the average molecular weight of the linear polyfluoro compound represented by the formula (I) to a desired average molecular weight in accordance with an intended purpose, the linear polyfluoro compound and an organic silicon compound having two hydrosilyl groups (Si-H groups ) per each molecule may be previously subjected to a hydrosilylation reaction by a normal method and under a normal condition(s) so that a chain-extended product can be used as the component (A).

Any one of these linear polyfluoro compounds may be used alone, or two or more of them may be used in combination.

In the composition of the present invention, it is preferred that the component (A) be contained in an amount of 10 to 98% by mass, more preferably 20 to 95% by mass, even more preferably 30 to 90% by mass.

### [Component (B)]

A component (B) is a fluorine-containing organo hydrogen siloxane having, in one molecule, 1 or more, preferably 1 to 10 fluorine-containing organic groups, and 2 or more, preferably 3 to 50 silicon atom-bonded hydrogen atoms (i.e. hydrosilyl groups represented by Si-H). The component (B) serves as a cross-linking agent and/or chain extender of the component (A). Further, in terms of, for example, compatibility to the component (A), dispersibility and evenness after curing, it is preferred that the component (B) have in one molecule, as a fluorine-containing organic group(s), at least one fluorine-containing group such as a monovalent perfluoroalkyl group, monovalent perfluorooxyalkyl group, divalent perfluoroalkylene group and/or divalent perfluorooxyalkylene group.

Examples of such monovalent or divalent fluorine-containing organic groups include those represented by the following formulae. 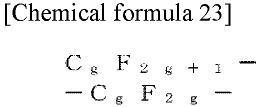 (In this formula, g represents an integer of 1 to 20, preferably an integer of 2 to 10.) 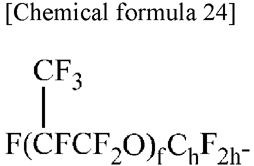 (In this formula, f represents an integer of 1 to 200, preferably an integer of 1 to 100; h represents an integer of 1 to 3.) 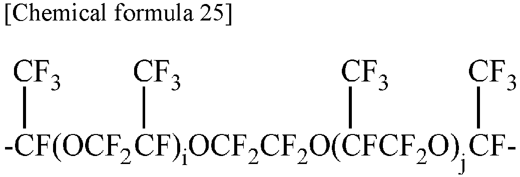 (In this formula, each of i and j represents an integer of not smaller than 1, preferably an integer of 1 to 100; an average of i+j is 2 to 200, preferably 2 to 100.) 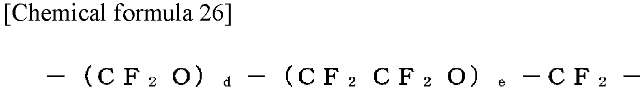 (In this formula, each of d and e represents an integer of 1 to 50, preferably an integer of 1 to 40.)

Further, it is preferred that these perfluoroalkyl group, perfluorooxyalkyl group, perfluoroalkylene group or perfluorooxyalkylene group be joined to the silicon atom(s) in the component (B) via a divalent linking group. This divalent linking group may be an alkylene group, an arylene group and a combination thereof; or a group obtained by interposing an ether bond (oxygen atom), an amide bond, a carbonyl bond, an ester bond, a diorganosilylene group or the like into any of the aforementioned groups. Examples of such divalent linking group include the following divalent linking groups each having 2 to 13 carbon atoms.

[Chemical formula 27] -CH₂CH₂- -CH₂CH₂CH₂- -CH₂CH₂CH₂OCH₂- -CH₂CH₂CH₂-NH-CO- -CH₂CH₂CH₂-N(Ph)-CO- -CH₂CH₂CH₂-N(CH₃)-CO- -CH₂CH₂CH₂-N(CH₂CH₃)-CO- -CH₂CH₂-Si(CH₃)₂-Ph'-N(CH₃)-CO- -CH₂CH₂CH₂-Si(CH₃)₂-Ph'-N(CH₃)-CO- -CH₂CH₂CH₂-O-CO-

(In these formulae, Ph represents a phenyl group, Ph' represents a phenylene group.)

Further, examples of a silicon atom-bonded monovalent substituent group(s) other than the abovementioned monovalent or divalent fluorine-containing organic groups and silicon atom-bonded hydrogen atoms in the fluorine-containing organo hydrogen siloxane as the component (B), include alkyl groups such as a methyl group, an ethyl group, a propyl group, a butyl group, a hexyl group, a cyclohexyl group, an octyl group and a decyl group; alkenyl groups such as a vinyl group and an allyl group; aryl groups such as a phenyl group, a tolyl group and a naphthyl group; aralkyl groups such as a benzyl group and a phenylethyl group; and groups obtained by substituting part of or all the hydrogen atoms in any of these groups with, for example, chlorine atoms and cyano groups, examples of which include substituted or unsubstituted monovalent hydrocarbon groups having 1 to 20, preferably 1 to 12 carbon atoms, such as a chloromethyl group, a chloropropyl group and a cyanoethyl group.

The fluorine-containing organo hydrogen siloxane as the component (B) may be cyclic, chainlike, three-dimensional net-like or a combination(s) of these types. There are no particular restrictions on the number of the silicon atoms in the fluorine-containing organo hydrogen siloxane; the number of the silicon atoms therein is usually 2 to 60, preferably about 3 to 30.

Examples of such component (B) having a monovalent or divalent fluorine-containing organic group(s) and a silicon atom-bonded hydrogen atom(s), include the following compounds. Any one of these compounds may be used alone, or two or more of them may be used in combination. Here, in the following formulae, Me represents a methyl group; Ph represents a phenyl group.

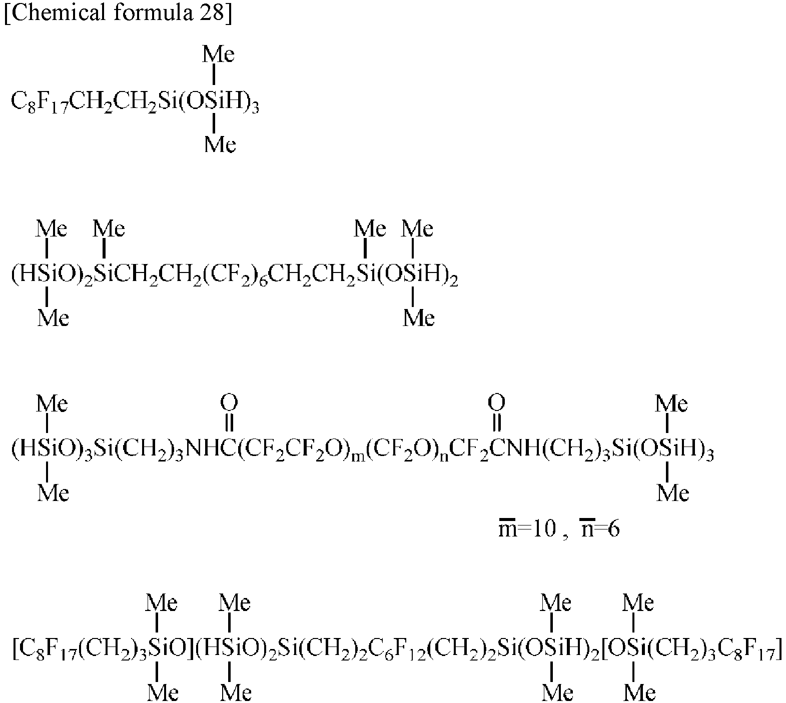

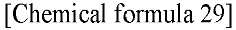

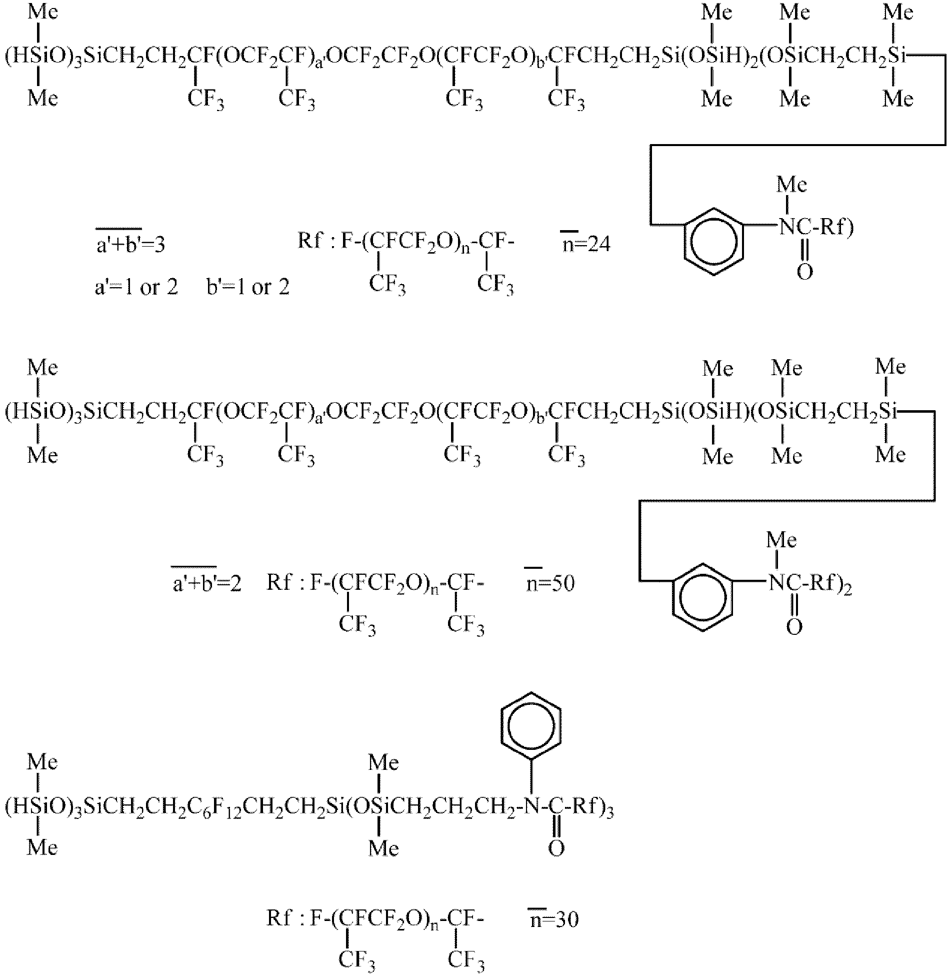

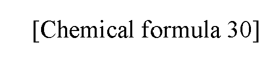

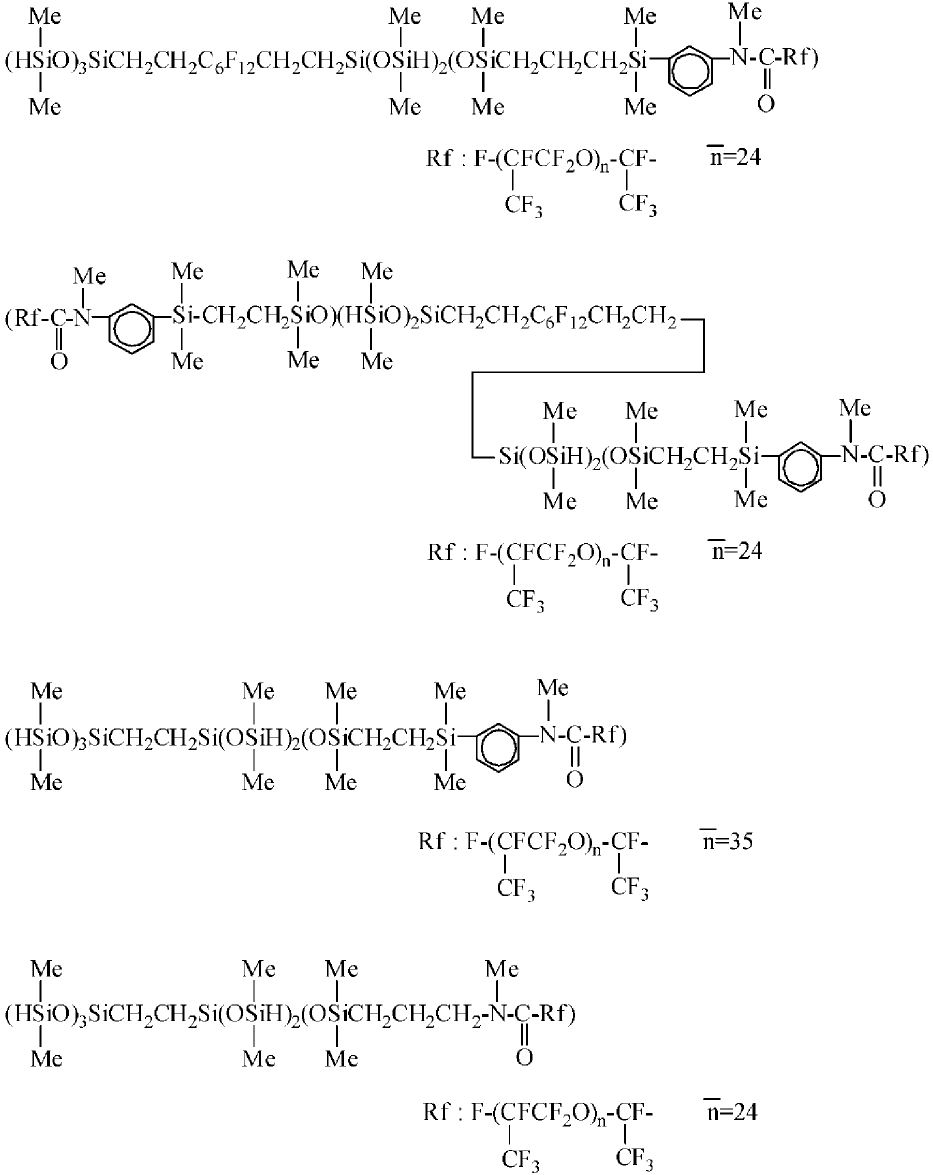

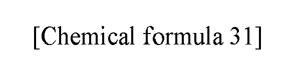

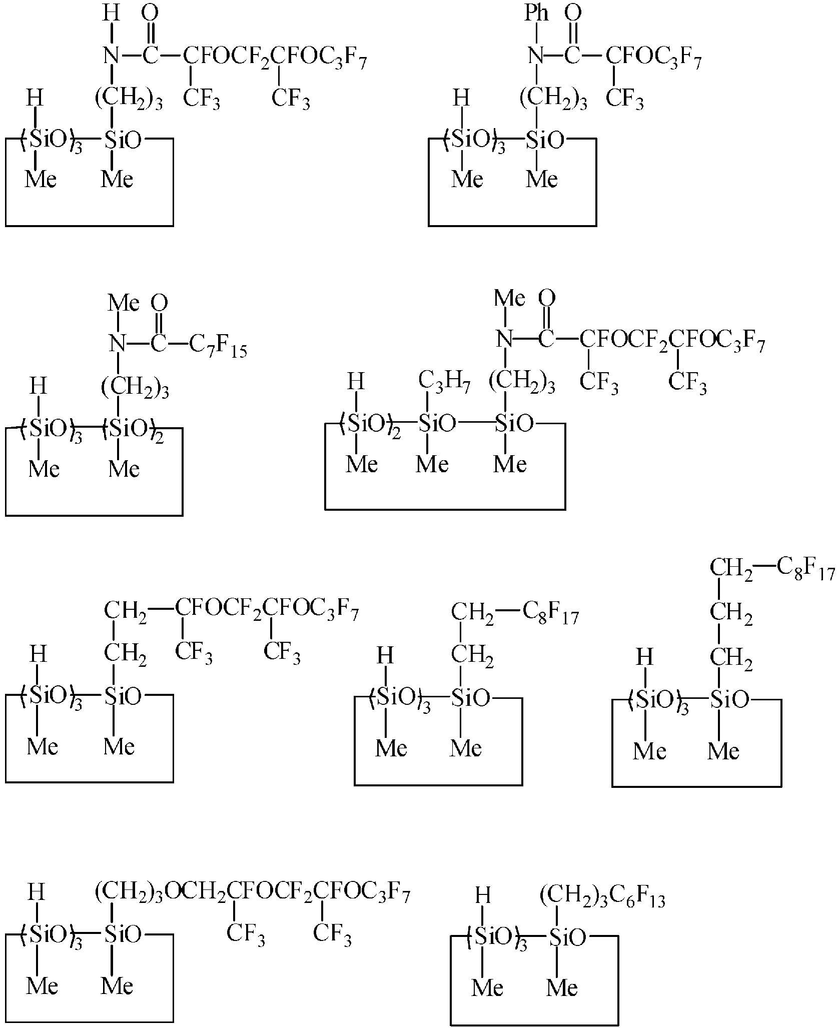

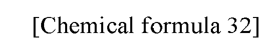

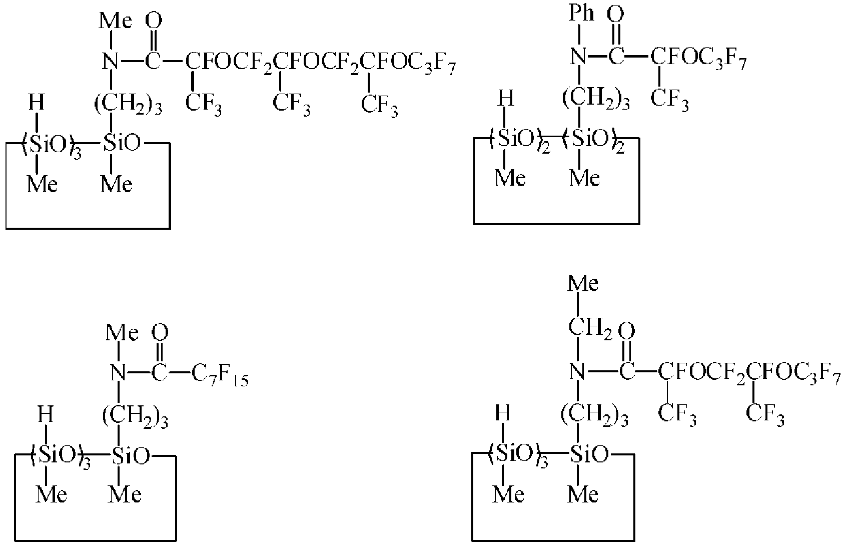

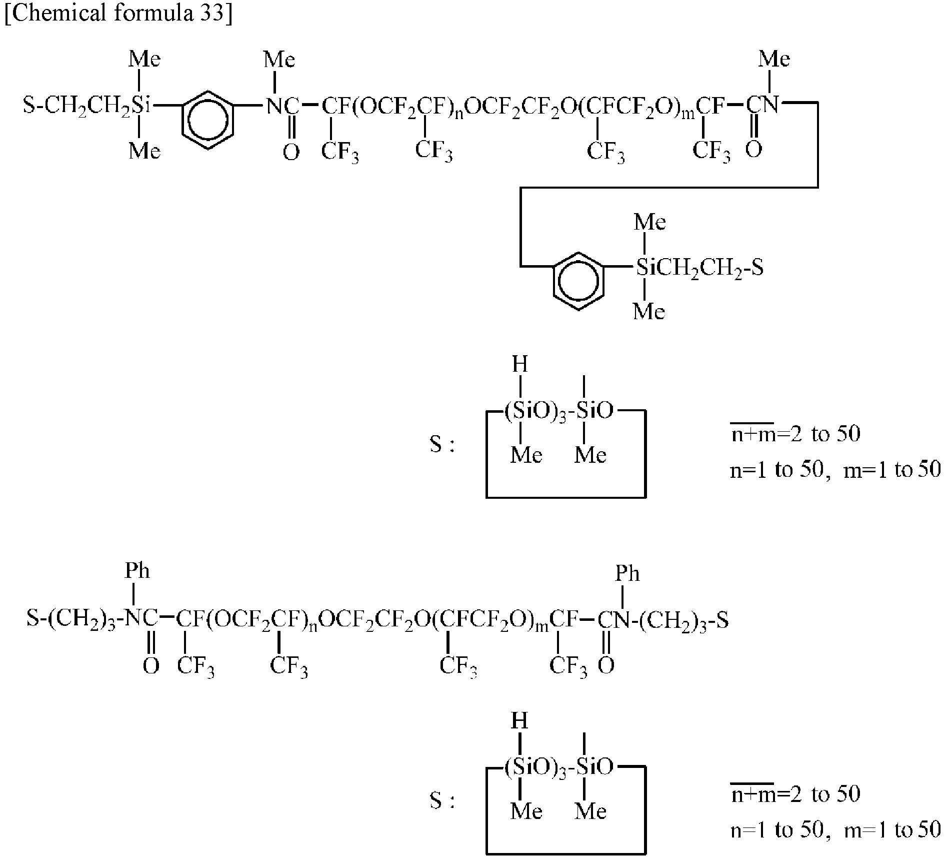

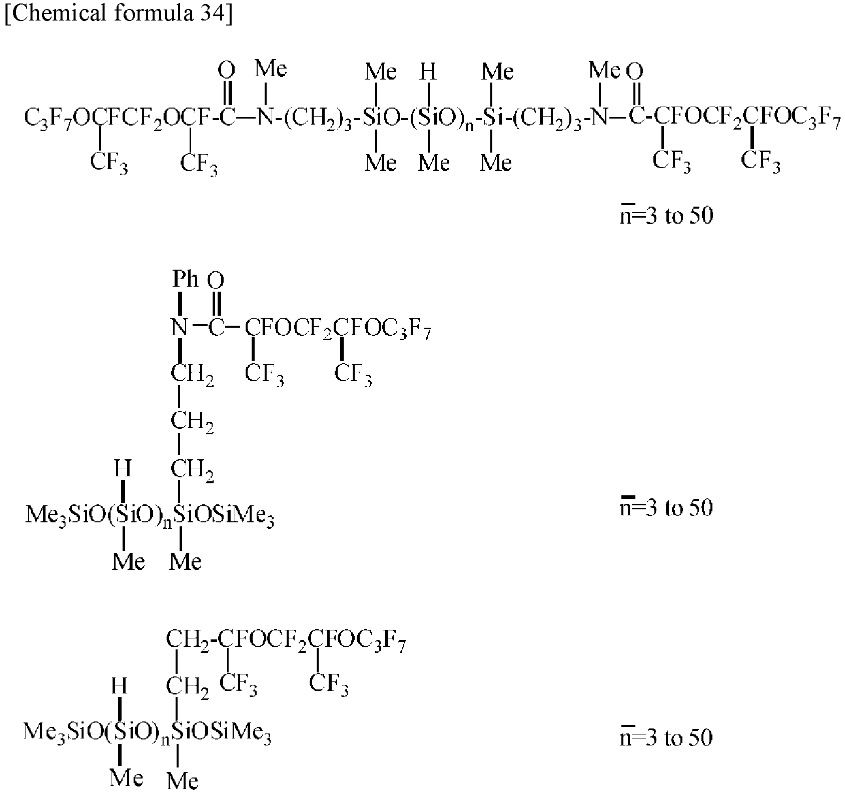

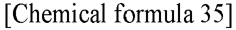

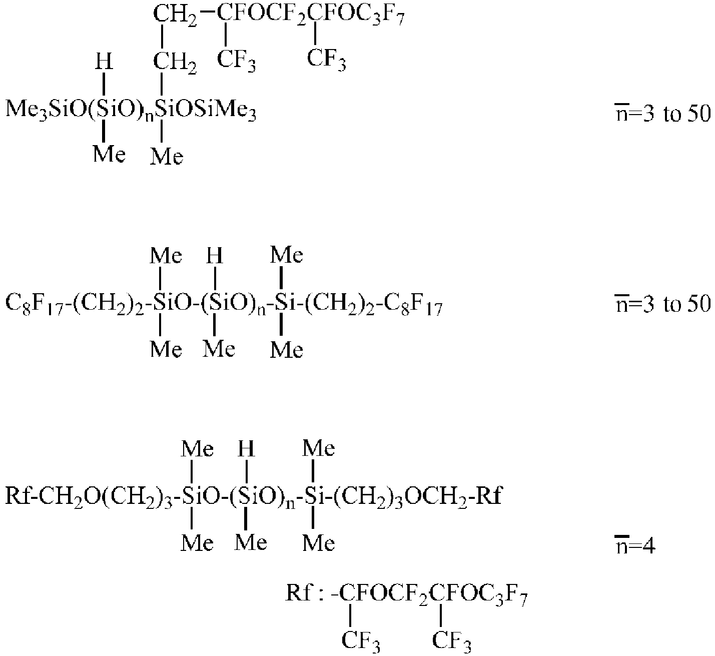

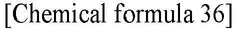

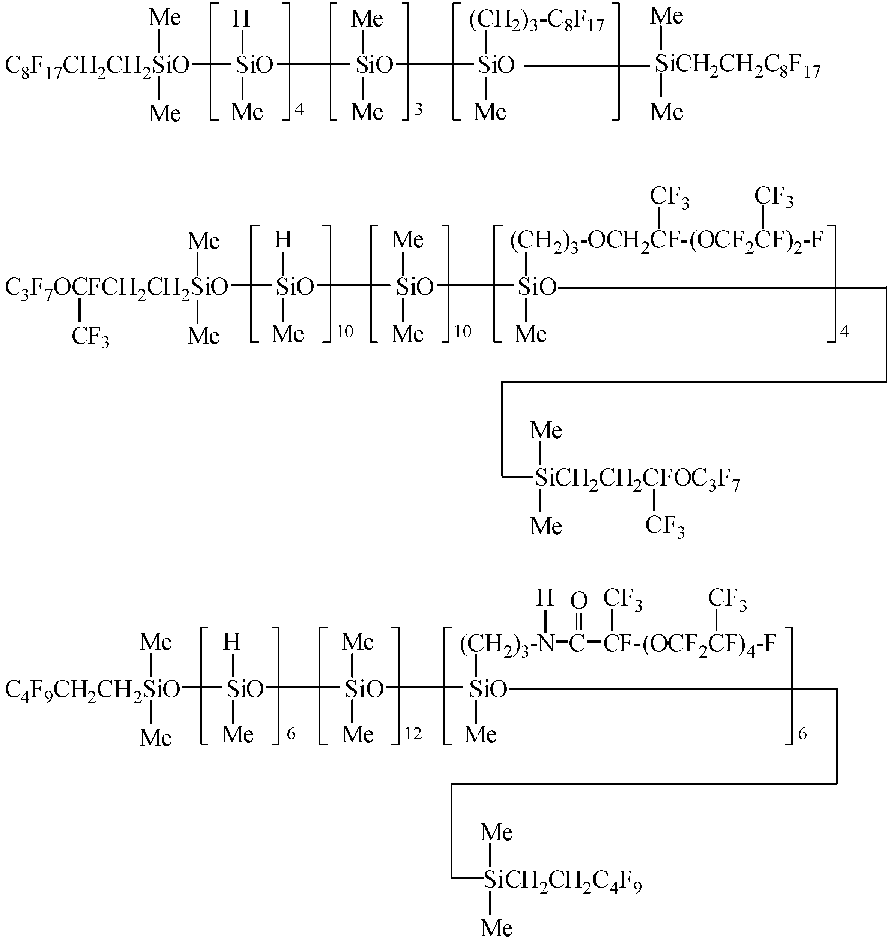

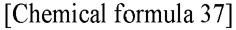

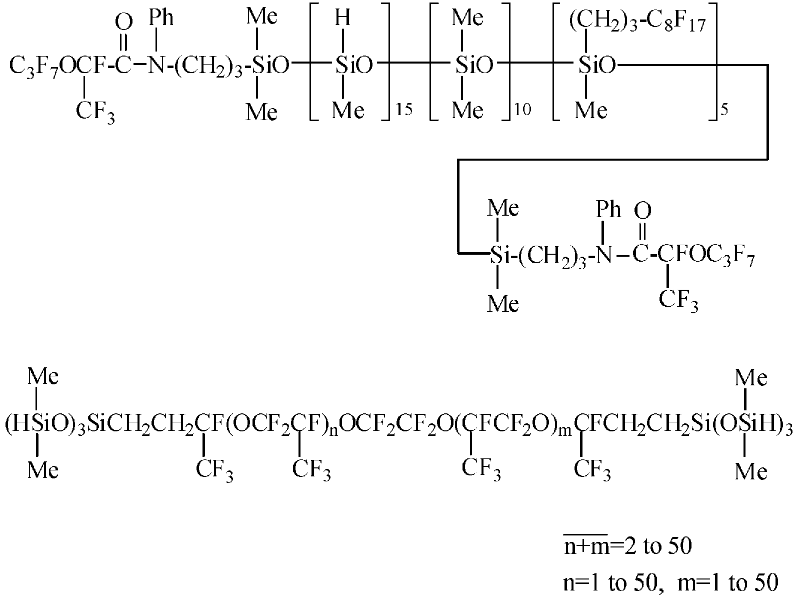

A Si-H content in the fluorine-containing organo hydrogen siloxane as the component (B) is preferably 0.00050 to 0.01000 mol/g, more preferably 0.00100 to 0.00800 mol/g. When the Si-H content in the fluorine-containing organo hydrogen siloxane is excessively small, an insufficient cross-linking density will be observed such that the cured product obtained may exhibit impaired physical properties; when the Si-H content is excessively large, the composition may foam at the time of curing, and the physical properties of the cured product obtained may change significantly with time.

The component (B) is added in an amount where the hydrosilyl groups i.e. Si-H groups in the component (B) are present in an amount of 0.5 to 3.0 mol, preferably 0.8 to 2.0 mol, per 1 mol of the alkenyl groups such as a vinyl group, allyl group and cycloalkenyl group that are contained in the component (A). When the amount of the hydrosilyl groups (≡Si-H) is excessively small, a cured product cannot be obtained due to an insufficient cross-linking density. Further, when the amount of the hydrosilyl groups is excessively large, the composition will foam at the time of curing.

### [Component (C)]

A component (C) is a photoactive hydrosilylation reaction metal catalyst. The photoactive hydrosilylation reaction metal catalyst is a catalyst for promoting an addition reaction between the alkenyl groups in the component (A) and the hydrosilyl groups in the component (B) as a result of having a metal(s) in the catalyst activated when irradiated with a light, particularly a near-ultraviolet ray of 300 to 400 nm. This photoactive hydrosilylation reaction metal catalyst is mainly a platinum group-based metal catalyst or a nickel-based metal catalyst. As a platinum group-based metal catalyst, there are a platinum-based, a palladium-based and a rhodium-based metal complex compounds; as a nickel-based metal catalyst, there are a nickel-based, an iron-based and a cobalt-based metal complex compounds. Among them, a platinum-based metal complex compound is preferred as it is relatively easily available and exhibits a favorable catalyst activity.

Examples of a photoactive platinum-based metal complex compound include a (η⁵-cyclopentadienyl)tri(α-alkyl)platinum complex compound and a β-diketonato platinum complex compound, specific examples of which include
(methylcyclopentadienyl)trimethyl platinum (IV),
(cyclopentadienyl)trimethyl platinum (IV),
(1,2,3,4,5-pentamethylcyclopentadienyl)trimethyl platinum (IV),
(cyclopentadienyl)dimethylethyl platinum (IV),
(cyclopentadienyl)dimethylacetyl platinum (IV),
(trimethylsilylcyclopentadienyl)trimethyl platinum (IV),
(methoxycarbonylcyclopentadienyl)trimethyl platinum (IV),
(dimethylphenylsilylcyclopentadienyl)trimethyl cyclopentadienyl platinum (IV),
trimethyl(acetylacetonato) platinum (IV),
trimethyl(3,5-heptanedionato) platinum (IV),
trimethyl(methylacetoacetate) platinum (IV),
bis(2,4-pentanedionato) platinum (II),
bis(2,4-hexanedionato) platinum (II),
bis(2,4-heptanedionato) platinum (II),
bis(3,5-heptanedionato) platinum (II),
bis(1-phenyl-1,3-butanedionato) platinum (II),
bis(1,3-diphenyl-1,3-propanedionato) platinum (II) and
bis(hexafluoroacetylacetonato) platinum (II).

As for the usage of these catalysts, they may be used in a solid state if they are solid catalysts; in order to obtain a more even cured product, a catalyst is preferably used in a way such that a proper solvent with the catalyst being dissolved therein is to be compatibilized with the linear polyfluoro compound as the component (A).

There are no particular restrictions on a type of the solvent to be used as long as the catalyst can be dissolved therein; more preferred are a solvent with part of the hydrogen atoms in hydrocarbon groups being substituted by fluorine atoms, or a mixed solvent of a solvent with part of the hydrogen atoms in hydrocarbon groups being substituted by fluorine atoms and a solvent with all the hydrogen atoms in hydrocarbon groups being substituted by fluorine atoms, because these solvents allow the catalyst to be more uniformly dispersed in the composition.

Examples of a solvent with part of the hydrogen atoms in hydrocarbon groups being substituted by fluorine atoms, include
1,3-bis(trifluoromethyl)benzene,
1,2-bis(trifluoromethyl)benzene,
1,4-bis(trifluoromethyl)benzene,
1-methyl-3-(pentafluoroethyl)benzene,
1, 1,1-trifluoro-3-[3-(trifluoromethyl)phenyl]propan-2-one,
methyl 4-fluoro-3-(trifluoromethyl)benzoate,
n-butyl heptafluorobutyrate,
ethyl 3,5-bis(trifluoromethyl)benzoate,
2-methyl-5-(trifluoromethyl)benzaldehyde and
2,3-dimethoxybenzotrifluoride.

Further, examples of a solvent with all the hydrogen atoms in hydrocarbon groups being substituted by fluorine atoms, include octafluorotoluene, (1,1,2,3,3,3-hexafluoropropoxy)perfluorobenzene, pentafluoroethyl 2,2,2-trifluoroethyl ether, Fluorinert (by 3M Company), PF5060 (by 3M Company) and perfluoropolyether oligomer.

If using the catalyst as a solution, a preferable mixing ratio between the linear polyfluoro compound as the component (A) and the catalyst solution is in a range of 100:0.01 to 1.00 (mass ratio). When the amount of the catalyst solution added is larger than this range, the properties of the cured product may be impacted; meanwhile, when the amount of the catalyst solution added is smaller than this range, a deficiency in catalyst dispersion into the composition may occur. Thus, the concentration of the catalyst solution may be appropriately adjusted so that the mixing ratio will fall into the above range.

The component (C) is used in an amount of 0.1 to 500 ppm, preferably 1 to 100 ppm in terms of the mass of the metal atoms in such catalyst with respect to the component (A). When the amount of the component (C) used is excessively small, the photocurable composition will not be endowed with a sufficient photocurability; when the amount of the component (C) used is excessively large, the composition may foam, and a heat resistance of the cured product may be adversely affected.

### [Component (D)]

As a component (D), a polyfluoromonoalkenyl compound having one alkenyl group in one molecule and having a perfluoropolyether structure in a main chain can be added to the photocurable fluoropolyether-based elastomer composition.

As the component (D), a polyfluoromonoalkenyl compound represented by the following formula (4) is particularly preferred.
[Chemical formula 38]

Rf³-(X')_{g}-CH=CH₂ (4)

[In the formula (4), X' is defined as above in the formula (I); g represents 0 or 1. Rf³ represents a monovalent perfluoropolyether structure-containing group, preferably containing a structure represented by the following formula.]

[Chemical formula 39] C_{s'}F_{2S'+1}(CₕF₂ₕO)ᵢC_{t'}F_{2t'}-

(In this formula, s' represents an integer of 0 to 8; h represents an integer of 1 to 6; i represents an integer of 0 to 200, preferably an integer of 10 to 100, more preferably an integer of 20 to 50; t' represents 1 or 2.)

In the above formula (4), examples of Rf³ include the following groups. 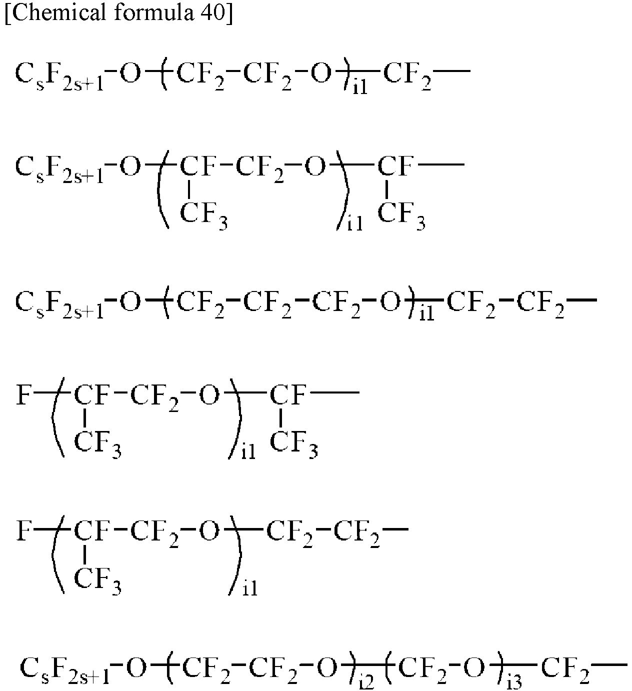 (In the above formulae, s represents an integer of 1 to 8; i1 represents an integer of 0 to 200; i2+i3 represents an integer of 0 to 200.)

Below are specific examples of the polyfluoromonoalkenyl compound represented by the general formula (4). 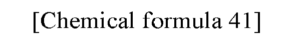 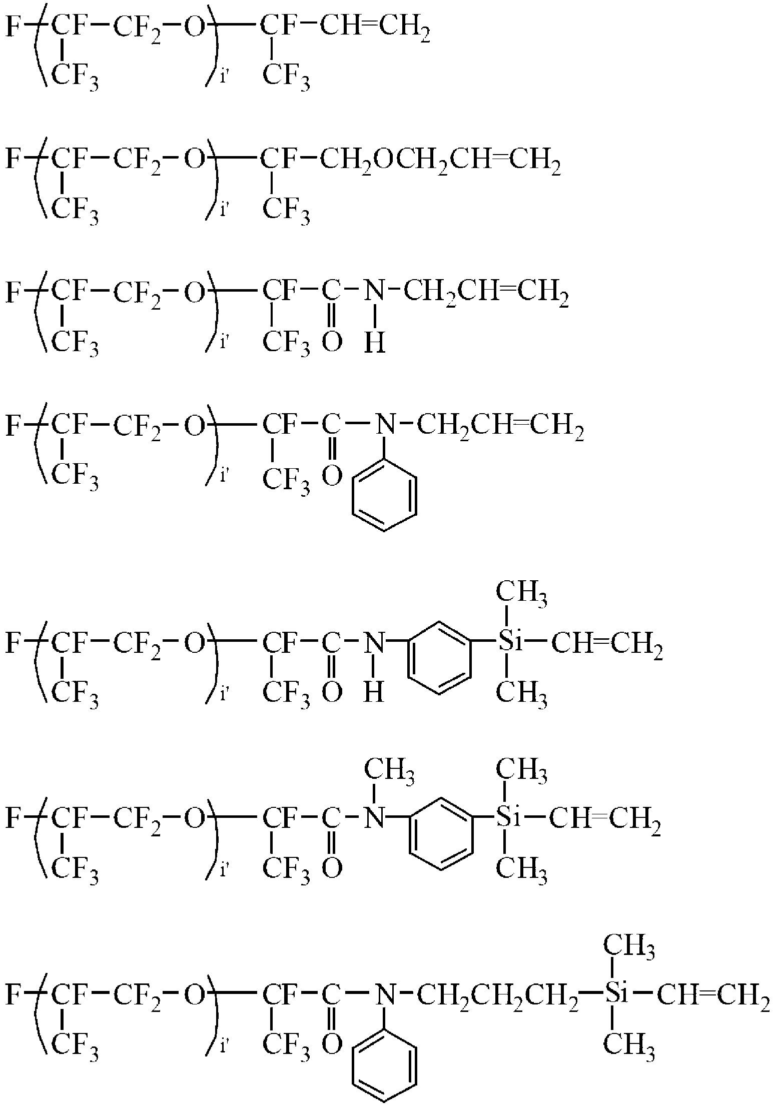 (In the above formulae, i' represents an integer of 0 to 200.)

It is preferred that an alkenyl group content in the above polyfluoromonoalkenyl compound be 0.005 to 0.050 mol/100 g, more preferably 0.010 to 0.040 mol/100 g. When the alkenyl group content in the polyfluoromonoalkenyl compound is excessively small, workability may be impaired due to an increased polymer viscosity; when the alkenyl group content is excessively large, there may be incurred adverse effects such as an impaired solubility to the composition, an impaired photocuring property, and inhomogeneous physical properties of the cured product.

Here, as for the polyfluoromonoalkenyl compound as the component (D), it is desired that a viscosity (23°C) thereof measured by a rotary viscometer be in the range of 5 to 100,000 mPa·s due to a reason similar to that of the linear polyfluoro compound as the component (A).

While it is optional to add the polyfluoromonoalkenyl compound as the component (D), by adding this component, the viscosity of the composition can be adjusted, and properties such as the hardness and an elongation at break of the cured product can be adjusted, without impairing properties such as chemical resistance, solvent resistance and a low-temperature property.

The component (D) is added in an amount of 0 to 300 parts by mass, preferably 1 to 150 parts by mass, per 100 parts by mass of the linear fluorine-containing polymer as the component (A) in the photocurable fluoropolyether-based elastomer composition. Since the addition of the component (D) is effective in lowering a cross-linking density, the amount thereof added can be appropriately adjusted depending on whether a desired hardness of the cured product shall be that of a rubber state or a gel state. That is, when the amount of the component (D) added is small, a higher cross-linking density will be observed after curing such that the cured product will be obtained as a product in a rubber state; when the amount of the component (D) added is large, a lower cross-linking density will be observed after curing such that the cured product will be obtained as a product in a gel state. When the amount of the component (D) added is greater than 300 parts by mass, an extremely low cross-linking density will be observed such that it may be difficult for the composition to be turned into a cured product as the composition may remain in a liquid state even after curing.

### [Component (E)]

The composition of the present invention may contain, as a component (E), at least one nonfunctional perfluoropolyether compound selected from the group consisting of compounds represented by the following general formulae (1) to (3).
[Chemical formula 42]

A-O-(CF₂CF₂CF₂O)ₐ-A (1)

[In the formula (1), A represents a group expressed by a formula C_{b}F_{2b+1}- (b represents an integer of 1 to 3); a represents an integer of 1 to 500, particularly an integer of 10 to 300.]
[Chemical formula 43]

A-O-(CF₂O)_{c}-(CF₂CF₂O)_{d}-A (2)

(In the formula (2), A is defined as above; each of c and d represents an integer of 1 to 300, particularly an integer of 2 to 100.) 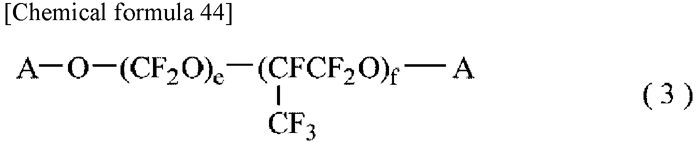 (In the formula (3), A is defined as above; each of e and f represents an integer of 1 to 300, particularly an integer of 2 to 100.)

While it is optional to add the nonfunctional perfluoropolyether compound as the component (E), by adding this component, the viscosity of the composition can be adjusted, and a chemical resistance, solvent resistance and low-temperature property of the cured product can be further improved without impairing other properties.

As for the component (E), it is desired that a viscosity (23°C) thereof measured by a rotary viscometer be in the range of 5 to 100,000 mPa·s due to a reason similar to that of the linear polyfluoro compound as the component (A).

It is preferred that the component (E) be added in an amount of 0 to 150 parts by mass, more preferably 0 to 100 parts by mass, particularly preferably 0 to 80 parts by mass, per 100 parts by mass of a total amount of the components (A) and (B). When the amount of the component (E) added is greater than 150 parts by mass, bleeding may occur from the cured product with time. Here, one kind of the component (E) may be used alone, or two or more kinds thereof may be used in combination.

### [Component (F)]

The composition of the present invention may contain, as a component (F), a hydrophobic silica fine powder having a BET specific surface area of not smaller than 0.1 m²/g. In this way, a proper physical strength can be imparted to the cured product obtained from the composition of the present invention.

It is preferred that the BET specific surface area of this hydrophobic silica fine powder be 0.1 to 1,000 m²/g, more preferably 1.0 to 500 m²/g, even more preferably 10 to 400 m²/g. When such BET specific surface area is smaller than 0.1 m²/g, sedimentation may occur with time as a dispersion stability of the fine powder in the composition cannot be achieved, or a desired physical strength may not be able to be imparted to the cured product due to a diminished reinforcement effect. Further, when the BET specific surface area is larger than 1,000 m²/g, other components may adsorb to the hydrophobic silica fine powder in the composition, or a desired physical strength may not be able to be imparted to the cured product due to the fact that the hydrophobic silica fine powder will have to be added in a smaller amount as the viscosity of the composition will rise significantly. In this invention, the BET specific surface area can be measured by N₂ gas adsorption of a single-point method provided in JIS Z 8830.

Examples of the silica fine powder include those of a dry silica, a precipitated silica, a gel-type silica, a colloidal silica and a molten spherical silica. Among these examples, a dry silica is the most preferred in terms of, for example, a dispersion stability in the composition and the effect of reinforcing the cured product.

The aforementioned hydrophobic silica fine powder is obtained by treating the hydroxyl groups (silanol groups) that are bonded to the silicon atoms on the silica surface with a hydrophobizing agent.

Examples of such hydrophobizing agent include organodisilazane, organoalkoxysilane, organochlorosilane, cyclic organopolysilazane and linear organopolysiloxane; among these examples, preferred are organodisilazane, organoalkoxysilane and organochlorosilane. More specific examples of the hydrophobizing agent include silazane compounds such as hexamethyl disilazane, hexaethyl disilazane, hexapropyl disilazane, 1,3-diethyl-1,1,3,3-tetramethyldisilazane, 1,3-dimethyl-1,1,3,3-tetraethyldisilazane, 1,3-divinyltetramethyldisilazane, 1,3-diallyltetramethyldisilazane, 1,3-dibutenyltetramethyldisilazane, 1,3-dipentenyltetramethyldisilazane, 1,3-dihexenyltetramethyldisilazane, 1,3-diheptenyltetramethyldisilazane, 1,3-dioctenyltetramethyldisilazane, 1,3-dinonenyltetramethyldisilazane, 1,3-didekenyltetramethyldisilazane, 1,3-divinyltetraethyldisilazane and 1,3-dimethyltetravinyldisilazane; alkoxysilane compounds such as methyltrimethoxysilane, ethyltrimethoxysilane, propyltrimethoxysilane, vinyltrimethoxysilane, allyltrimethoxysilane and butenyltrimethoxysilane; and chlorosilane compounds such as trimethylchlorosilane, triethylchlorosilane, tripropylchlorosilane, dimethyldichlorosilane, diethyldichlorosilane, dipropyldichlorosilane, dimethylvinylchlorosilane and allyldimethylchlorosilane. In terms of, for example, workability and reactivity with the silanol groups on the silica surface, preferred is a silazane compound or a chlorosilane compound, and particularly preferred are hexamethyl disilazane, 1,3-divinyltetramethyldisilazane and dimethyldichlorosilane.

This component (F) is added in an amount of 0.1 to 40 parts by mass, preferably 1 to 30 parts by mass, per 100 parts by mass of the component (A). When the amount of the component (F) added is smaller than 0.1 parts by mass, the physical properties of the cured product obtained will not be able to be adjusted; meanwhile, when the amount of the component (F) added is greater than 40 parts by mass, the composition may exhibit an impaired fluidity, or the photocurability thereof may deteriorate significantly.

As the hydrophobic silica fine powder, there may be used a silica fine powder that has been hydrophobized using the above hydrophobizing agent(s) in a combined manner; or a mixed silica fine powder prepared by mixing silica fine powders that have each been treated with any of the above hydrophobizing agents individually.

### [Component (G)]

The composition of the present invention may further contain, as a component (G), a conventionally known reaction control agent for hydrosilylation reaction without impairing the effects of the present invention. In this way, the composition can achieve a more favorable preservability. Examples of the reaction control agent include acetylene alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; and acetylene compounds such as 3-methyl-3-penten-1-yne and 3,5-dimethyl-3-hexen-1-yne. Further, as the reaction control agent, there may also be used, for example, the fluorine-containing acetylene alcohol compounds, polymethylvinylsiloxane cyclic compounds or organic phosphorus compounds that are represented by the following structural formulae.

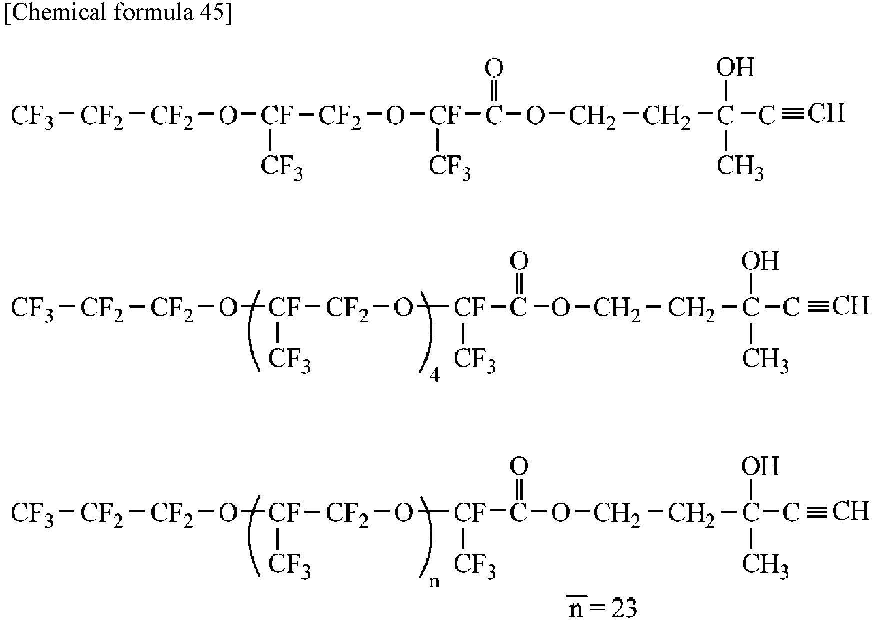

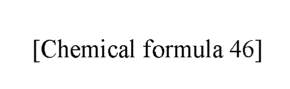

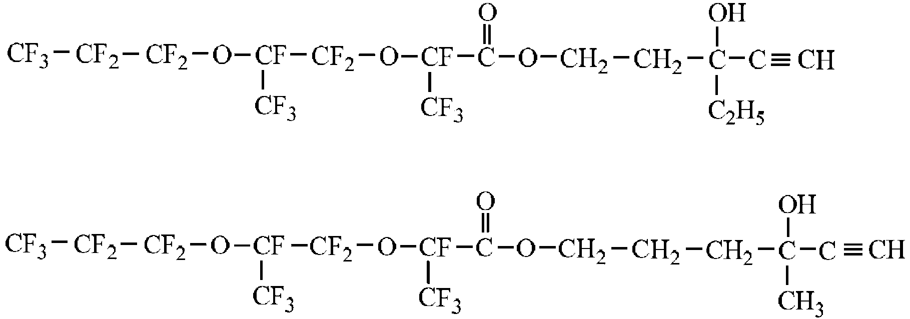

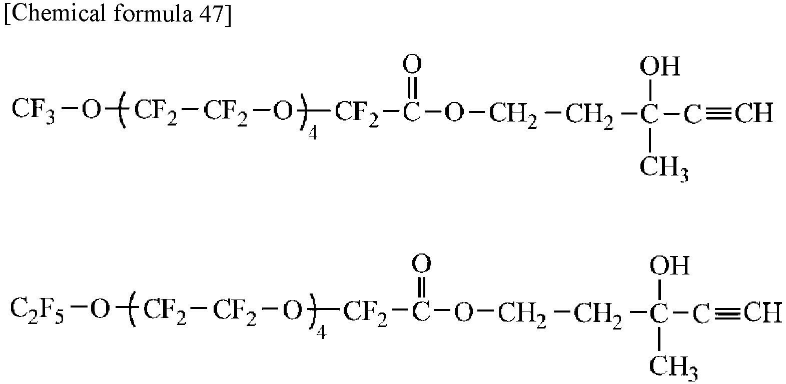

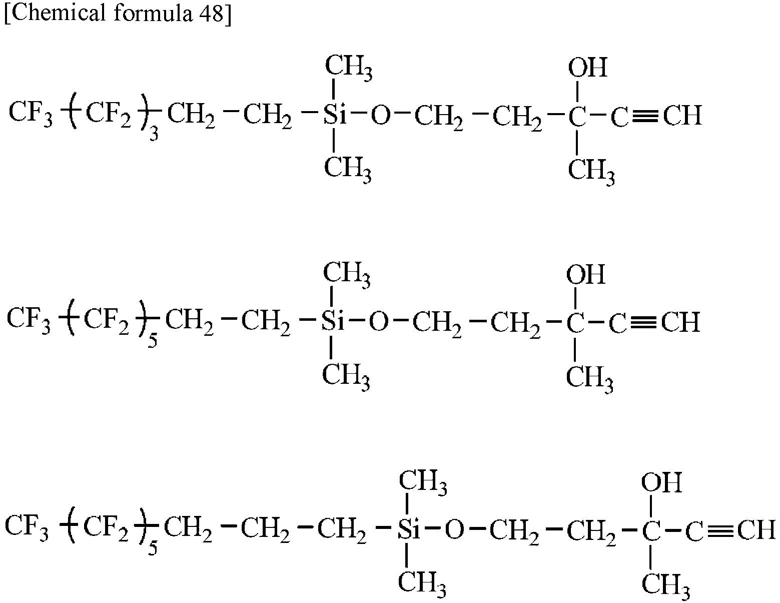

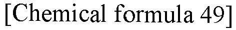

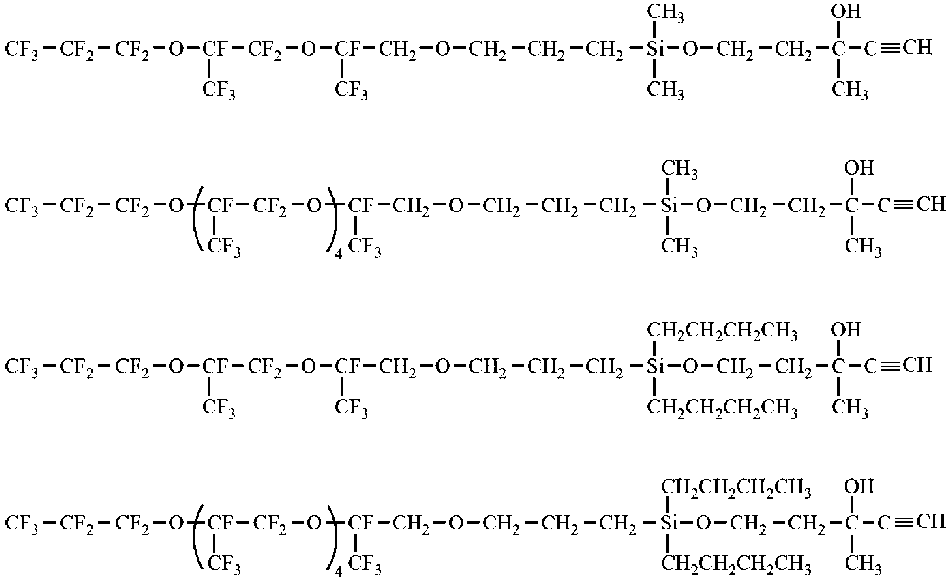

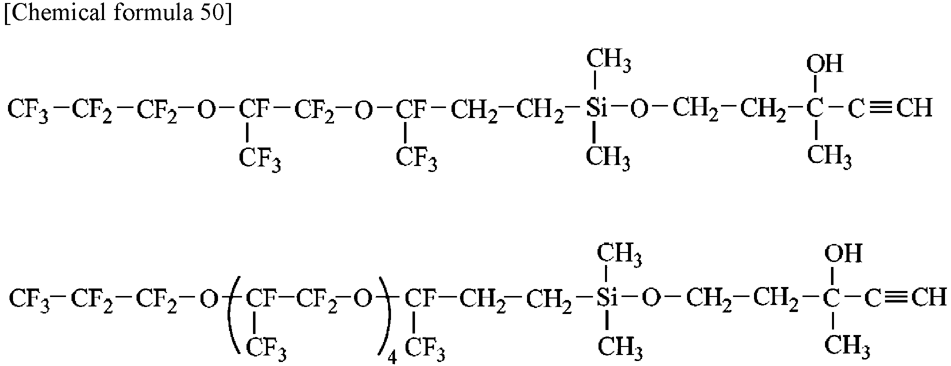

Since the control capabilities of these reaction control agents vary depending on the chemical structures thereof, the additive amount(s) thereof shall each be adjusted to a most appropriate amount. In general, when the amount of a reaction control agent added is excessively small, a long-term preservability at room temperature may not be achieved; when the amount of a reaction control agent added is excessively large, a curing speed may become sluggish such that a sufficient curability may not be achieved.

### [Other components]

In addition to the above components (A) to (G), the composition of the present invention may further contain, as necessary, various compounding agents such as an inorganic filler, a colorant, an adhesion promoter, an adhesion aid and a silane coupling agent for the purpose of improving the practicality of the composition. The amounts of these additives used are optional provided that the effects of the present invention will not be impaired, and that the characteristics of the photocurable composition and the properties of the cured product will not be impaired as well.

Examples of an inorganic filler include reinforcing or semi-reinforcing fillers such as a quartz powder, a molten quartz powder, diatom earth and calcium carbonate; inorganic colorants such as an iron oxide, carbon black and cobalt aluminate; heat resistance improvers such as titanium oxide, an iron oxide, carbon black, cerium oxide, cerium hydroxide, zinc carbonate, magnesium carbonate and manganese carbonate; thermal conductivity imparting agents such as alumina, boron nitride, silicon carbide and a metal powder; and electric conductivity imparting agents such as carbon black, a silver powder and an electrically conductive zinc oxide.

Examples of a colorant may include synthetic colorants such as azo-based compounds and quinone-based compounds that are conventionally known; and natural colorants such as cochineal-based compounds and indigo-based compounds.

Further, in the present invention, there may be added, as necessary, an adhesion promoter or adhesion imparting agent such as a carboxylic acid anhydride and titanate ester; and/or a silane coupling agent.

### [Method for producing photocurable fluoropolyether-based elastomer composition]

The photocurable fluoropolyether-based elastomer composition can be produced by uniformly mixing the components (A), (B) and (C); preferably, by uniformly mixing the components (A), (B), (C) and (G) with other optional components, by uniformly mixing the components (A), (B), (C), (F) and (G) with other optional components, or by uniformly mixing the components (A), (B), (C), (D), (E) and (G) with other optional components, using a mixing device such as a planetary mixer, a Ross mixer and a HOBART mixer, or even a kneading device, if necessary, such as a kneader and a triple roll mill.

There are no particular restrictions on a method for producing the photocurable fluoropolyether-based elastomer composition; the composition can be produced by kneading together the above components. Further, two kinds of compositions may be prepared in the beginning, and then mixed together at the time of use.

Described hereunder is an example of a method for producing the photocurable fluoropolyether-based elastomer composition by combining the components (A), (B), (C), (F) and (G).

### [Method for producing base compound]

At first, 10 to 50 parts by mass of the component (F) are added to 100 parts by mass of the component (A) under a heated or unheated condition, followed by performing kneading under a heated and pressure-reduced condition or under a heated and pressurized condition so as to produce a base compound highly filled with the component (F) in the component (A).

Here, the purpose for producing the base compound comprised of the components (A) and (F) in the beginning is to sufficiently coat the surface of the hydrophobic silica fine powder as the component (F) with the linear polyfluoro compound as the component (A). In this way, the components (B) and (G) shall not easily adsorb to the silica surface of the component (F), or the components (B) and (F) themselves shall not easily agglutinate, thereby reducing the viscosity of the photocurable fluoropolyether-based elastomer composition, and improving the photocurability thereof. Compounding and kneading of the components (A) and (F) may be performed by a kneading device such as a planetary mixer, a gate mixer and a kneader.

Although the compounding ratio between the components (A) and (F) varies depending on the type of the hydrophobic silica powder as the component (F), it is preferred that the component (F) be used in an amount of 10 to 50 parts by mass per 100 parts by mass of the component (A). When the component (F) is in an amount of smaller than 10 parts by mass per 100 parts by mass of the component (A), it may be difficult to reduce the viscosity of a final compounding composition such that a significantly high viscosity may be observed. Further, when the component (F) is in an amount of greater than 50 parts by mass per 100 parts by mass of the component (A), an increase in viscosity and a heat generation will occur at an intense level at the time of preforming kneading, and later, mixing may not be able to be performed in a uniform manner when adding the rest of the components, or, for example, the volatile components may be distilled away, whereby desired properties of the cured product may not be able to be achieved accordingly.

Although a temperature and time period for performing compounding and kneading when producing the base compound may be appropriately determined, it is preferred that a heat treatment temperature be 120 to 180°C, and that kneading be performed for an hour or longer so that the components will be evenly dispersed.

As for a pressure at the time of performing compounding and kneading, since the pressure varies depending on a device used, it is preferred that compounding and kneading be performed under a pressurized or pressure-reduced condition depending on such device. For example, if performing kneading with a planetary mixer or a gate mixer, it is preferred that the pressure condition be a pressure-reduced condition in which the pressure is not higher than - 0.05 MPa in terms of gauge pressure. Further, if performing kneading with a kneader, it is preferred that the pressure condition be a pressurized condition in which the pressure is 0.4 to 0.6 MPa in terms of gauge pressure. The reason for carrying out the operation under such condition(s) is because the component (A) can thus easily exhibit a wettability on (easily coat) the surface of the component (F).

The photocurable fluoropolyether-based elastomer composition can then be obtained by adding the components (A), (B), (C) and (G) to the above base compound comprised of the components (A) and (F).

Here, when using the photocurable fluoropolyether-based elastomer composition, based on its intended use and purpose, the composition may be dissolved in a proper fluorine-based solvent in a way such that the composition will have a desired concentration therein; examples of such fluorine-based solvent include 1,3-bis(trifluoromethyl)benzene, Fluorinert (by 3M Company), perfluorobutyl methyl ether, perfluorobutyl ethyl ether, perfluoropolyether oligomer or mixtures thereof. Particularly, it is preferred that the solvent be used for a thin film coating purpose.

### [Photocurable fluoropolyether-based elastomer cured product]

The photocurable composition whose main components are the components (A) to (C); preferably the components (A), (B), (C) and (G); the components (A), (B), (C), (F) and (G); or the components (A), (B), (C), (D), (E) and (G), is capable of forming a rubber-like or gel-like cured product having a superior chemical resistance and solvent resistance as well as a low moisture permeability when subjected to light irradiation in accordance with the above light irradiation method. Further, by applying the composition to a target area in accordance with the above application method(s), curing can take place in a uniform manner even in the dark and deep portions of a base material to which the composition is to be applied, and a cured product (coating film) can be obtained without being subjected to a curing inhibition from the base material.

### WORKING EXAMPLES

The present invention is described in detail hereunder with reference to reference examples, comparative reference examples, working examples and comparative examples; however, the present invention is not limited to the following working examples. Here, in the following examples, part(s) refer to parts by mass. Further, a viscosity refers to a value measured at 23°C (according to JIS K7117-1). A molecular weight refers to a number average molecular weight in terms of polystyrene that is measured in a GPC analysis using a fluorine-based solvent as a developing solvent.

### Production of base compound for photocurable fluoropolyether-based elastomer composition

### [Production example 1]

Here, 27 parts of Aerosil NAX50 (product name by Nippon Aerosil Co., Ltd.) produced by hydrophobizing an untreated dry silica fine powder having a BET specific surface area of 50 m²/g with hexamethyldisilazane, were added in a divided manner to 100 parts of a polymer represented by the following formula (6) (viscosity 9,000 mPa·s, vinyl group content 0.00013 mol/g, number average molecular weight 15,700) in a planetary mixer, followed by performing kneading for an hour. Next, a heat treatment was carried out by performing kneading at 150°C for an hour under a reduced pressure (-0.08 to -0.10 MPa); after cooling, a dispersion treatment was then performed using a triple roll mill so as to produce a base compound.

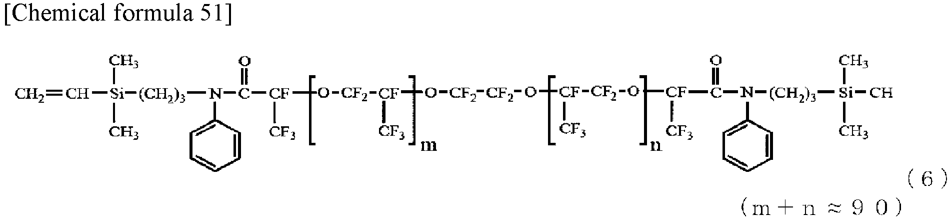

### Preparation of photocurable fluoropolyether-based elastomer composition

### [Preparation example 1]

Here, 20 parts of the base compound prepared in the production example 1 and 69 parts of the polymer represented by the formula (6) were put into a planetary mixer and then mixed together until uniformly mixed. Next, 0.05 parts of a 1,3-bis(trifluoromethyl)benzene solution of (methylcyclopentadienyl)trimethyl platinum (IV) (platinum concentration 3.0% by mass), 0.05 parts of a toluene solution of 1-ethynyl-1-hydroxycyclohexane (5.0% by mass), 0.21 parts of a fluorine-containing organo hydrogen siloxane represented by the following formula (7) (Si-H group content 0.0050 mol/g) and 4.0 parts of a fluorine-containing organo hydrogen siloxane represented by the following formula (8) (Si-H group content 0.0026 mol/g ) were sequentially added thereto, followed by performing mixing until uniformly mixed. Next, a defoaming operation was carried out to prepare a composition. The composition of the preparation example 1 (unit: part by mass) is shown in Table 1.

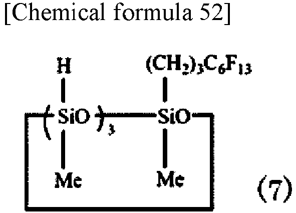

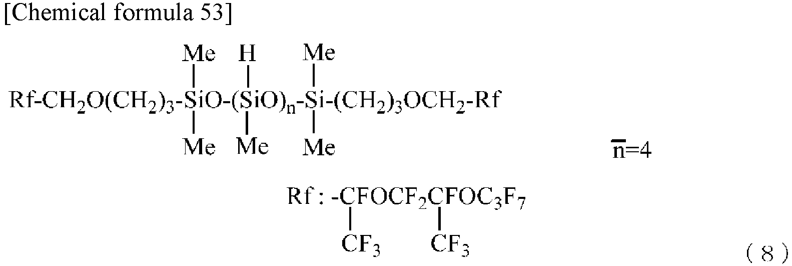

### [Preparation example 2]

Here, 100 parts of a polymer represented by the following formula (9) (viscosity 8,500 mPa·s, vinyl group content 0.00012 mol/g, number average molecular weight 15,000), 0.05 parts of a 1,3-bis(trifluoromethyl)benzene solution of (methylcyclopentadienyl)trimethyl platinum (IV) (platinum concentration 3.0% by mass), 0.03 parts of a toluene solution of 1-ethynyl-1-hydroxycyclohexane (5.0% by mass) and 3.0 parts of a fluorine-containing organo hydrogen siloxane represented by the following formula (10) were sequentially added, followed by performing mixing until uniformly mixed. Next, a defoaming operation was carried out to prepare a composition. The composition of the preparation example 2 (unit: part by mass) is shown in Table 1.

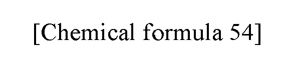

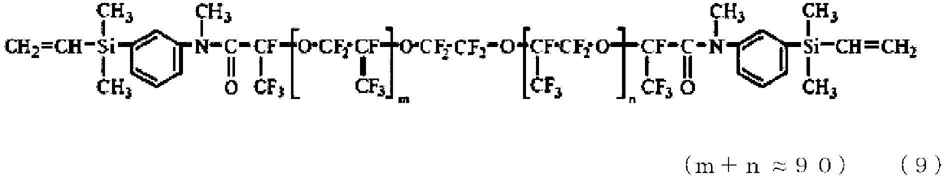

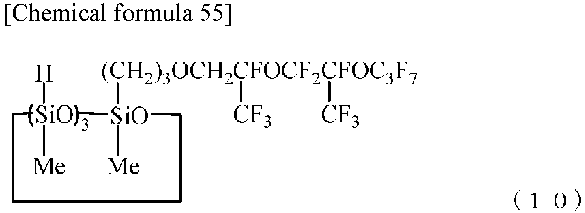

### [Preparation example 3]

Here, 38 parts of the polymer represented by the formula (6), 12 parts of a polymer represented by the following formula (11) (viscosity 900 mPa·s, vinyl group content 0.023 mol/100 g, number average molecular weight 4,000) and 50 parts of a perfluoropolyether oil represented by the following formula (12) (viscosity 770 mPa·s, number average molecular weight 4,100) were put into a planetary mixer and then mixed until uniformly mixed. Next, 0.05 parts of a 1,3-bis(trifluoromethyl)benzene solution of (methylcyclopentadienyl)trimethyl platinum (IV) (platinum concentration 3.0% by mass), 0.03 parts of a toluene solution of 1-ethynyl-1-hydroxycyclohexane (5.0% by mass) and 1.4 parts of the fluorine-containing organo hydrogen siloxane represented by the formula (7) were sequentially added thereto, followed by performing mixing until uniformly mixed. Next, a defoaming operation was carried out to prepare a composition. The composition of the preparation example 3 (unit: part by mass) is shown in Table 1.

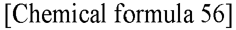

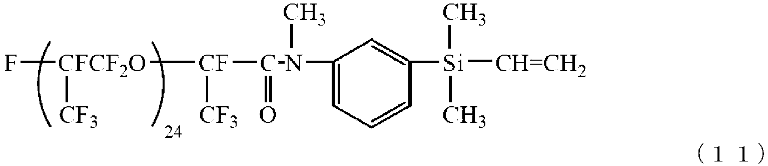

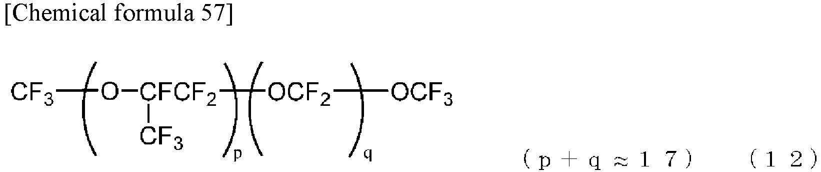

**[Table 1]**

| | Preparation example 1 | Preparation example 2 | Preparation example 3 |
|---|---|---|---|
| Base compound | 20 | - | - |
| Linear polyfluoro compound (6) | 69 | - | 38 |
| Linear polyfluoro compound (9) | - | 100 | - |
| Polyfluoromonoalkenyl compound (11) | - | - | 12 |
| Nonfunctional perfluoropolyether compound (12) | - | - | 50 |
| hydrosilylation reaction catalyst (Methylcyclopentadienyl trimethyl platinum (IV) solution) | 0.05 | 0.05 | 0.05 |
| Reaction control agent (1-ethynyl-1-hydroxycyclohexane solution) | 0.05 | 0.03 | 0.03 |
| Fluorine-containing organo hydrogen siloxane (7) | 0.21 | - | 1.4 |
| Si-H group/Vi group (molar ratio) | 0.1 | - | 0.95 |
| Fluorine-containing organo hydrogen siloxane (8) | 4.0 | - | - |
| Si-H group/Vi group (molar ratio) | 1.0 | - | - |
| Fluorine-containing organo hydrogen siloxane (10) | - | 3.0 | - |
| Si-H group/Vi group (molar ratio) | - | 0.95 | - |

### [Preservation stability evaluation]

### [Reference example 1]

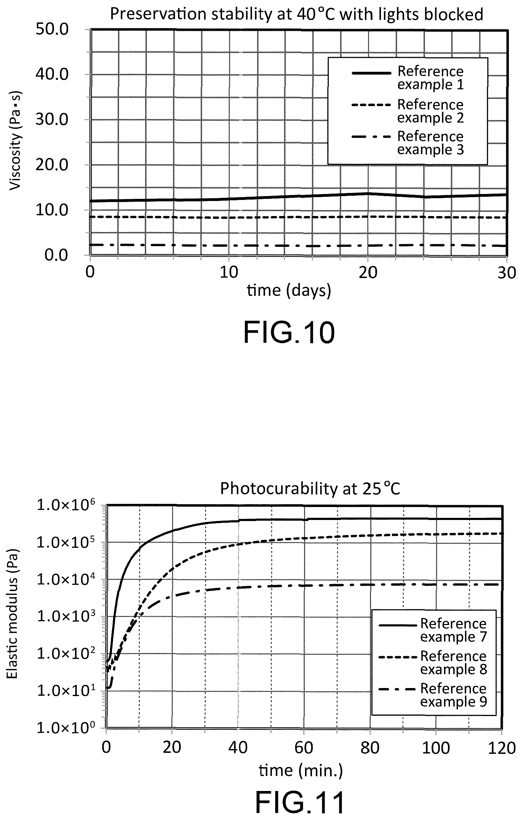

Evaluated was a change in viscosity of the photocurable composition obtained in the preparation example 1 as a result of storing the composition in a tightly sealed light-blocking bottle at 40°C for 30 days. The result thereof is shown in FIG.10. Here, the viscosity was measured in accordance with JIS K7117-1, using a TV-10U type rotary viscometer (spindle No. H7, 23°C, 50 rpm) manufactured by TOKI SANGYO CO., LTD.

### [Reference example 2]

Evaluation was performed by an operation similar to that of the reference example 1, except that the photocurable composition used in the reference example 1 was now changed from that of the preparation example 1 to that of the preparation example 2. The result thereof is shown in FIG.10.

### [Reference example 3]

Evaluation was performed by an operation similar to that of the reference example 1, except that the photocurable composition used in the reference example 1 was now changed from that of the preparation example 1 to that of the preparation example 3. The result thereof is shown in FIG.10.

As shown by the results in FIG.10, it was confirmed that each photocurable fluoropolyether-based elastomer composition exhibited a favorable preservation stability while being blocked from light.

### [Photocurability evaluation-in connection with light irradiation dose-]

### [Reference example 4]

The photocurable composition obtained in the preparation example 3 was applied to a 60 mmφ × 10 mm circular aluminum petri dish by such an amount that the composition applied would have a thickness of 2 mm therein, followed by performing light irradiation. Here, light irradiation was performed using a surface irradiation type UV-LED irradiator (by CCS Inc.), where an irradiance at 365 nm was 100 mW/cm², and an irradiation time was 45 sec (cumulative intensity; 4,500 mJ/cm²). Lights were blocked immediately after finishing light irradiation, and the composition was then left to stand still at 23°C for 24 hours. A curing degree and an appearance of the composition were later confirmed. The result thereof is shown in Table 2.

### [Reference example 5]

Evaluation was performed by an operation similar to that of the reference example 4, except that the light irradiation condition was now changed to 100 mW/cm² for 10 sec (cumulative intensity; 1,000 mJ/cm²). The result thereof is shown in Table 2.

### [Reference example 6]

Evaluation was performed by an operation similar to that of the reference example 4, except that the light irradiation condition was now changed to 100 mW/cm² for 5 min (cumulative intensity; 30,000 mJ/cm²). The result thereof is shown in Table 2.

### [Comparative reference example 1]

Evaluation was performed by an operation similar to that of the reference example 4, except that the light irradiation condition was now changed to 50 mW/cm² for 1 sec (cumulative intensity; 50 mJ/cm²). The result thereof is shown in Table 2.

### [Comparative reference example 2]

Evaluation was performed by an operation similar to that of the reference example 4, except that the light irradiation condition was now changed to 100 mW/cm² for 20 min (cumulative intensity; 120,000 mJ/cm²). The result thereof is shown in Table 2.

**[Table 2]**

| | Reference example 4 | Reference example 5 | Reference example 6 | Comparative reference example 1 | Comparative reference example 2 |
|---|---|---|---|---|---|
| Cumulative intensity (mJ/cm²) | 4,500 | 1,000 | 30,000 | 50 | 120,000 |
| Cure state after 24 hours at 23°C | Uniformly cured | Uniformly cured | Uniformly cured | Uncured | Surface of cured product yellowed. |
| | | | | | Stickiness observed. |

### [Photocurability evaluation-elastic modulus evaluation-]

### [Reference example 7]

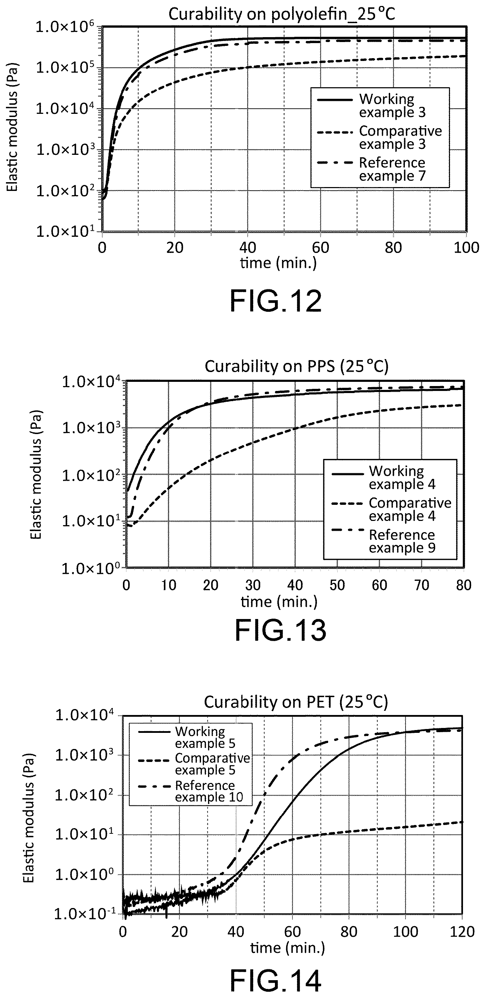

The photocurable composition obtained in the preparation example 1 was applied to an aluminum base material at 25°C in a way such that a sample thickness would be 1.0 mm, followed by performing light irradiation, and then measuring a change in elastic modulus with time at 25°C. A sample diameter was set to 8 mmφ, and a light irradiation dose was set to 100 mW/cm² for 45 sec. Light irradiation was performed by attaching a 320-390 nm bandpass filter to OmniCure S2000 (product name by Lumen Dynamics Group Inc.) which is a spot type highpressure mercury lamp. A strain-controlled rheometer ARES-G2 (product name by TA Instruments.) was used to perform the measurement at a frequency of 1 Hz and at a strain of 10%. The results thereof are shown in FIG. 11 and FIG. 12.

### [Reference example 8]

Evaluation was performed by an operation similar to that of the reference example 7, except that the photocurable composition used in the reference example 7 was not changed from that of the preparation example 1 to that of the preparation example 2. The result thereof is shown in FIG. 11.

### [Reference example 9]

Evaluation was performed by an operation similar to that of the reference example 7, except that the photocurable composition used in the reference example 7 was now changed from that of the preparation example 1 to that of the preparation example 3. The results thereof are shown in FIG. 11 and FIG. 13.

As shown by the results in FIG. 11, it was confirmed that the photocurable fluoropolyether-based elastomer composition exhibited a favorable photocurability at 25°C.

### [Evaluation of curability in dark portion]

### [Working example 1]

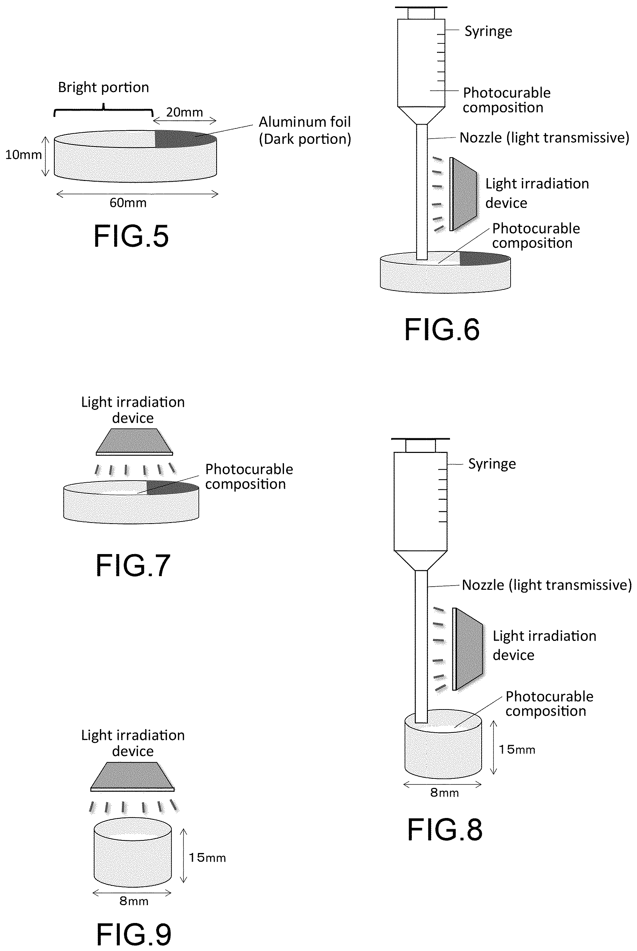

An aluminum foil was used to cover a portion of a 60 mmφ × 10 mm circular aluminum petri dish, starting from one end thereof to a 20 mm point, thus obtaining a container having a dark portion as shown in FIG.5.

The photocurable composition obtained in the preparation example 3 was injected into a polypropylene syringe connected to a glass nozzle (inner diameter 2 mmφ, length 3 cm). Next, while performing light irradiation on the nozzle portion, a pusher of the syringe was pushed so as to apply the composition to the inner side of the aluminum petri dish in a way such that the composition applied would have a thickness of 4 mm (see FIG.6). Light irradiation was performed using a surface irradiation type UV-LED irradiator (by CCS Inc.). Further, when performing light irradiation, a discharge speed and a light irradiation dose were adjusted in such a manner that the composition, while passing through the nozzle portion, shall be subjected to light irradiation at an irradiance of 100 mW/cm² at 365 nm for an irradiation time of 45 sec.

Lights were blocked immediately after finishing the application, and the petri dish was then left to stand still at 23°C for two hours. A curing degree was later confirmed by touching. The result thereof is shown in Table 3.

### [Comparative example 1]

In the working example 1, instead of the method of applying the photocurable composition to the inner side of the aluminum petri dish while performing light irradiation, the method was now changed to a method shown in FIG.7 where the composition was at first applied to the inner side of the aluminum petri dish in a way such that the composition applied would have a thickness of 4 mm, followed by performing light irradiation from above. There, light irradiation was performed using the same surface irradiation type UV-LED irradiator as that of the working example 1, where an irradiance at 365 nm was 100 mW/cm², and an irradiation time was 45 sec. Lights were blocked immediately after finishing light irradiation, and the petri dish was then left to stand still at 23°C for two hours. A curing degree was later confirmed by touching. The result thereof is shown in Table 3.

### [Evaluation of curability in deep portion]

### [Working example 2]

The photocurable composition obtained in the preparation example 1 was injected into a polypropylene syringe having a nozzle portion, followed by, as shown in FIG.8, applying the composition to the inner side of an 8 mmφ × 15 mm circular aluminum petri dish while performing light irradiation on the composition at the nozzle portion. The application quantity was such a quantity that the composition applied would have a thickness of 10 mm; and as is the case with the working example 1, light irradiation was performed in a way such that an irradiance at 365 nm was 100 mW/cm², and an irradiation time was 45 sec. Lights were blocked immediately after finishing the application, and the petri dish was then left to stand still at 23°C for two hours. A curing degree was later confirmed by touching. The result thereof is shown in Table 3.

### [Comparative example 2]

In the working example 2, instead of the method of applying the composition to the inner side of the petri dish while performing light irradiation at the nozzle portion, the method was now changed to a method shown in FIG.9 where the composition of the preparation example 1 was at first applied to the inner side of the aluminum petri dish in a way such that the composition applied would have a thickness of 10 mm, followed by performing light irradiation from above. There, light irradiation was performed in a way such that an irradiance at 365 nm was 100 mW/cm², and an irradiation time was 45 sec. Lights were blocked immediately after finishing light irradiation, and the petri dish was then left to stand still at 23°C for two hours. A curing degree was later confirmed by touching. The result thereof is shown in Table 3.

**[Table 3]**

| | Dark portion curability | | Deep portion curability | |
|---|---|---|---|---|
| | Working example 1 | Comparative example 1 | Working example 2 | Comparative example 2 |
| Cure state after 2 hours at 23°C | Uniformly cured | Uncured in dark portion 3 mm or more away from bright portion | Uniformly cured | Uncured in deep portion 5 mm or more away from upper portion |

As shown by the results in Table 3, with the coating film forming method of the present invention, the composition was able to be uniformly cured even in dark portions and deep portions.

### [Evaluation of photocurability on base material]

### [Working example 3]

The photocurable composition obtained in the preparation example 1 was injected into a polypropylene syringe having a nozzle portion, followed by applying the composition to a polyolefin base material while performing light irradiation at the nozzle portion in a manner similar to that of the working example 1, where an irradiance at 365 nm was 100 mW/cm², and an irradiation time was 45 sec. Elastic modulus measurement was then performed at a temperature of 25°C, a sample thickness of 1.0 mm, a frequency of 1 Hz and a strain of 10%. The result thereof is shown in FIG.12.

### [Comparative example 3]

Elastic modulus measurement was performed by an operation similar to that of the working example 3, except that the photocurable composition obtained in the preparation example 1 was applied to a polyolefin base material at a sample thickness of 1.0 mm before performing light irradiation on such polyolefin base material. The result thereof is shown in FIG.12.

As shown by the results in FIG. 12, it was confirmed that a curing inhibition owing to the polyolefin base material did not occur when employing the coating film forming method of the present invention. In contrast, with regard to the method employed in the comparative example, a low elastic modulus was observed due to a curing inhibition from the polyolefin base material, and in fact, a curing failure in a base material interface was confirmed even with a sample that had already been subjected to elastic modulus measurement.

### [Working example 4]

Elastic modulus measurement was performed in a manner similar to that of the working example 3, except that the photocurable composition used in the working example 3 was now changed from that of the preparation example 1 to that of the preparation example 3, and that a base material to which the composition was to be applied was now changed from the polyolefin base material to a polyphenylene sulfide (PPS) base material. The result thereof is shown in FIG. 13.

### [Comparative example 4]

Elastic modulus measurement was performed in a manner similar to that of the working example 4, except that the photocurable composition obtained in the preparation example 3 was applied to a PPS base material at a sample thickness of 1.0 mm before performing light irradiation on such PPS base material. The result thereof is shown in FIG. 13.

As shown by the results in FIG. 13, it was confirmed that a curing inhibition owing to the PPS base material did not occur when employing the coating film forming method of the present invention. In contrast, with regard to the method employed in the comparative example, a low elastic modulus was observed due to a curing inhibition from the PPS base material, and in fact, a curing failure in a base material interface was confirmed even with a sample that had already been subjected to elastic modulus measurement.

### [Reference example 11]

An 8 mmφ × 15 mm circular aluminum petri dish was filled with the photocurable composition obtained in the preparation example 3 at a thickness of 2 mm, followed by performing light irradiation at an irradiance of 100 mW/cm² at 365 nm for an irradiation time of 20 sec. Next, the composition contained in a syringe was applied to a PET base material, followed by performing elastic modulus measurement at a temperature of 25°C, a sample thickness of 1.0 mm, a frequency of 1 Hz and a strain of 10%. The result thereof is shown in FIG.14.

### [Comparative example 5]

Elastic modulus measurement was performed by an operation similar to that of the working example 5, except that the photocurable composition obtained in the preparation example 3 was applied to a PET base material at a sample thickness of 1.0 mm before performing light irradiation on such PET base material. The result thereof is shown in FIG.14.

### [Reference example 10]

Elastic modulus measurement was performed by an operation similar to that of the working example 5, except that the photocurable composition obtained in the preparation example 3 was applied to an aluminum base material at a sample thickness of 1.0 mm before performing light irradiation on such aluminum base material. The result thereof is shown in FIG.14.

As shown by the results in FIG.14, it was confirmed that a curing inhibition owing to the PET base material did not occur when employing the coating film forming method of the present invention. In contrast, with regard to the method employed in the comparative example, a low elastic modulus was observed due to a curing inhibition from the PET base material, and in fact, a curing failure was confirmed even with a sample that had already been subjected to elastic modulus measurement.

## Claims

1. A coating film forming method for forming a coating film of a photocurable fluoropolyether-based elastomer composition, comprising:
a step of applying a light-irradiated photocurable fluoropolyether-based elastomer composition to a surface of a base material,
wherein the photocurable fluoropolyether-based elastomer composition is applied to the surface of the base material while performing light irradiation on the photocurable fluoropolyether-based elastomer composition,
wherein light irradiation is performed with an ultraviolet light whose maximum peak wavelength is in a range of 300 to 400 nm, where an irradiation dose is 100 mJ/cm² to 100,000 mJ/cm² in terms of cumulative intensity, and
wherein the photocurable fluoropolyether-based elastomer composition comprises:
(A) 100 parts by mass of a linear polyfluoro compound having at least two alkenyl groups in one molecule, and having a perfluoropolyether structure in a main chain;
(B) a fluorine-containing organo hydrogen siloxane having at least two silicon atom-bonded hydrogen atoms (SiH groups) in one molecule, the component (B) being in an amount where the SiH groups are present in an amount of 0.5 to 3.0 mol per 1 mol of the alkenyl groups in the component (A); and
(C) a photoactive hydrosilylation reaction metal catalyst, the component (C) being in an amount of 0.1 to 500 ppm in terms of a mass of metal atoms with respect to the component (A).

2. The coating film forming method according to claim 1, wherein the photocurable fluoropolyether-based elastomer composition further comprises, as a component (D),
(D) a polyfluoromonoalkenyl compound having one alkenyl group in one molecule and having a perfluoropolyether structure in a main chain, the component (D) being in an amount of 1 to 300 parts by mass per 100 parts by mass of the component (A).

3. The coating film forming method according to claim 1 or 2, wherein the photocurable fluoropolyether-based elastomer composition further comprises, as a component (E),
(E) at least one nonfunctional perfluoropolyether compound selected from the group consisting of compounds represented by the following general formulae (1) to (3), the component (E) being in an amount of 0 to 150 parts by mass per a total of 100 parts by mass of the components (A) and (B):
A-O-(CF₂CF₂CF₂O)ₐ-A (1)
wherein A represents a group expressed by a formula C_{b}F_{2b+1}- (b represents an integer of 1 to 3), a represents an integer of 1 to 500;
A-O-(CF₂O)_{c}-(CF₂CF₂O)_{d}-A (2)
wherein A is defined as above, each of c and d represents an integer of 1 to 300; 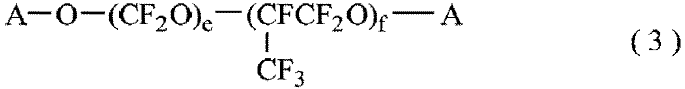 wherein A is defined as above, each of e and f represents an integer of 1 to 300.

4. The coating film forming method according to any one of claims 1 to 3, wherein the photocurable fluoropolyether-based elastomer composition further comprises, as a component (F),
(F) a hydrophobic silica powder having a BET specific surface area of not smaller than 0.1 m²/g, the component (F) being in an amount of 0.1 to 40 parts by mass per 100 parts by mass of the component (A).

5. The coating film forming method according to any one of claims 1 to 4, wherein the photocurable fluoropolyether-based elastomer composition further comprises, as a component (G), a reaction control agent for hydrosilylation reaction.

6. The coating film forming method according to any one of claims 1 to 5, wherein the component (A) is a linear polyfluoro compound represented by the following formula (I):
CH₂=CH-(X)_{g}-Rf¹-(X') _{g}-CH=CH₂ (I)
wherein X represents -CH₂-, -CH₂O-, -CH₂OCH₂- or -Y-NR¹-CO-; X' represents -CH₂-, - OCH₂-, -CH₂OCH₂- or -CO-NR²-Y'-; g independently represents 0 or 1; Rf¹ represents a divalent perfluoropolyether group represented by a formula (i) or (ii),
wherein Y represents -CH₂-, -Si(CH₃)₂CH₂CH₂CH₂-, -Si(CH₃)(CH=CH₂)CH₂CH₂CH₂-, - Si(CH=CH₂)₂CH₂CH₂CH₂- or an o-, m- or p-silylphenylene group represented by a structural formula (Z); R¹ represents a hydrogen atom, or a substituted or unsubstituted monovalent hydrocarbon group; Y' represents -CH₂-, -CH₂CH₂CH₂Si(CH₃)₂-, - CH₂CH₂CH₂Si(CH₃)(CH=CH₂)-, -CH₂CH₂CH₂Si(CH=CH₂)₂- or an o-, m- or p-silylphenylene group represented by a structural formula (Z'); R² represents a hydrogen atom, or a substituted or unsubstituted monovalent hydrocarbon group,
the formulae (i), (ii), (Z) and (Z') being the following formulae: 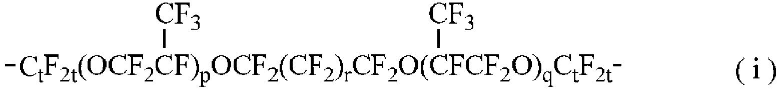
wherein each of p and q represents 0 or an integer of 1 to 150, and an average of a sum of p and q is 2 to 200; r represents an integer of 0 to 6; t represents 2 or 3, 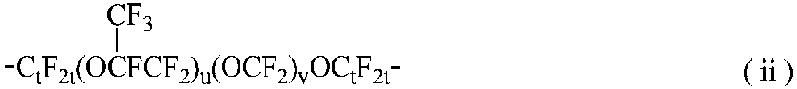
wherein u represents an integer of 1 to 200; v represents an integer of 1 to 50; t represents 2 or 3, 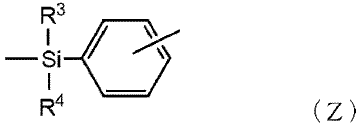
wherein each of R³ and R⁴ independently represents -CH₃ or -CH=CH₂, 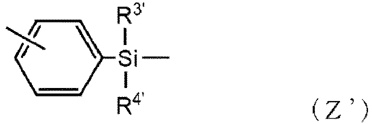
wherein each of R³' and R⁴' independently represents -CH₃ or -CH=CH₂.

7. The coating film forming method according to any one of claims 1 to 6, wherein the fluorine-containing organo hydrogen siloxane as the component (B) has, in one molecule, at least one monovalent perfluoroalkyl group, monovalent perfluorooxyalkyl group, divalent perfluoroalkylene group and/or divalent perfluorooxyalkylene group.

8. The coating film forming method according to any one of claims 1 to 7, wherein the photoactive hydrosilylation reaction metal catalyst as the component (C) is a (η⁵-cyclopentadienyl)tri(σ-alkyl)platinum (IV) complex.

9. The coating film forming method according to any one of claims 1 to 8, wherein the photocurable fluoropolyether-based elastomer composition is contained in a container having a nozzle portion, and light irradiation is performed on the composition through the nozzle portion.

## Patentansprüche

1. Beschichtungsfilmausbildungsverfahren zum Ausbilden eines Beschichtungsfilms aus einer lichthärtbaren Elastomerzusammensetzung auf Fluorpolyetherbasis, umfassend:
einen Schritt des Aufbringens einer lichtbestrahlten lichthärtbaren Elastomerzusammensetzung auf Fluorpolyetherbasis auf eine Oberfläche eines Basismaterials,
wobei die lichthärtbare Elastomerzusammensetzung auf Fluorpolyetherbasis auf die Oberfläche des Basismaterials aufgebracht wird, während eine Lichtbestrahlung an der lichthärtbaren Elastomerzusammensetzung auf Fluorpolyetherbasis durchgeführt wird,
wobei die Lichtbestrahlung mit einem ultravioletten Licht durchgeführt wird, dessen maximale Spitzenwellenlänge in einem Bereich von 300 bis 400 nm liegt, wobei eine Bestrahlungsdosis 100 mJ/cm² bis 100.000 mJ/cm² in Bezug auf die kumulative Intensität beträgt, und
wobei die lichthärtbare Elastomerzusammensetzung auf Fluorpolyetherbasis umfasst:
(A) 100 Massenteile einer linearen Polyfluorverbindung mit mindestens zwei Alkenylgruppen in einem Molekül und mit einer Perfluorpolyetherstruktur in einer Hauptkette;
(B) ein fluorhaltiges Organowasserstoffsiloxan mit mindestens zwei siliciumatomgebundenen Wasserstoffatomen (SiH-Gruppen) in einem Molekül, wobei die Komponente (B) in einer Menge vorliegt, in der die SiH-Gruppen in einer Menge von 0,5 bis 3,0 Mol pro 1 Mol der Alkenylgruppen in der Komponente (A) vorhanden sind; und
(C) einen photoaktiven Hydrosilylierungsreaktionsmetallkatalysator, wobei die Komponente (C) in einer Menge von 0,1 bis 500 ppm in Bezug auf eine Masse von Metallatomen in Bezug auf die Komponente (A) vorliegt.

2. Beschichtungsfilmausbildungsverfahren gemäß Anspruch 1, wobei die lichthärtbare Elastomerzusammensetzung auf Fluorpolyetherbasis ferner als eine Komponente (D) umfasst
(D) eine Polyfluormonoalkenylverbindung mit einer Alkenylgruppe in einem Molekül und mit einer Perfluorpolyetherstruktur in einer Hauptkette, wobei die Komponente (D) in einer Menge von 1 bis 300 Massenteilen pro 100 Massenteile der Komponente (A) vorliegt.

3. Beschichtungsfilmausbildungsverfahren gemäß Anspruch 1 oder 2, wobei die lichthärtbare Elastomerzusammensetzung auf Fluorpolyetherbasis ferner als eine Komponente (E) umfasst
(E) mindestens eine nichtfunktionelle Perfluorpolyetherverbindung, ausgewählt aus der Gruppe, bestehend aus Verbindungen, dargestellt durch die folgenden allgemeinen Formeln (1) bis (3), wobei die Komponente (E) in einer Menge von 0 bis 150 Massenteilen pro insgesamt 100 Massenteile der Komponenten (A) und (B) vorliegt:
A-O-(CF₂CF₂CF₂O)ₐ-A (1)
wobei A eine Gruppe darstellt, ausgedrückt durch eine Formel C_{b}F_{2b+1}- (b stellt eine ganze Zahl von 1 bis 3 dar), a stellt eine ganze Zahl von 1 bis 500 dar;
A-O- (CF₂O)_{c}- (CF₂CF₂O)_{d} - A ( 2 )
wobei A wie oben definiert ist, jedes von c und d stellt eine ganze Zahl von 1 bis 300 dar; 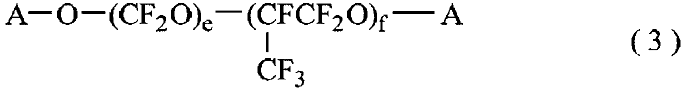 wobei A wie oben definiert ist, jedes von e und f stellt eine ganze Zahl von 1 bis 300 dar.

4. Beschichtungsfilmausbildungsverfahren gemäß einem der Ansprüche 1 bis 3, wobei die lichthärtbare Elastomerzusammensetzung auf Fluorpolyetherbasis ferner als eine Komponente (F) umfasst
(F) ein hydrophobes Siliciumdioxidpulver mit einer spezifischen BET-Oberfläche von nicht kleiner als 0,1 m²/g, wobei die Komponente (F) in einer Menge von 0,1 bis 40 Massenteilen pro 100 Massenteile der Komponente (A) vorliegt.

5. Beschichtungsfilmausbildungsverfahren gemäß einem der Ansprüche 1 bis 4, wobei die lichthärtbare Elastomerzusammensetzung auf Fluorpolyetherbasis ferner als eine Komponente (G) ein Reaktionssteuerungsmittel für eine Hydrosilylierungsreaktion umfasst.

6. Beschichtungsfilmausbildungsverfahren gemäß einem der Ansprüche 1 bis 5, wobei die Komponente (A) eine lineare Polyfluorverbindung ist, dargestellt durch die folgende Formel (I):
CH₂=CH- (X) _{g}-Rf¹- (X' ) _{g}-CH=CH₂ ( I )
wobei X -CH₂-, -CH₂O-, -CH₂OCH₂- oder -Y-NR¹-CO- darstellt; X' -CH₂-, -OCH₂-, - CH₂OCH₂- oder -CO-NR²-Y'- darstellt; g unabhängig 0 oder 1 darstellt; Rf¹ eine zweiwertige Perfluorpolyethergruppe darstellt, dargestellt durch eine Formel (i) oder (ii),
wobei Y -CH₂-, -Si(CH₃)₂CH₂CH₂CH₂-, -Si(CH₃)(CH=CH₂)CH₂CH₂CH₂-, - Si(CH=CH₂)₂CH₂CH₂CH₂- oder eine o-, m- oder p-Silylphenylengruppe darstellt, dargestellt durch eine Strukturformel (Z); R¹ ein Wasserstoffatom oder eine substituierte oder unsubstituierte einwertige Kohlenwasserstoffgruppe darstellt; Y' - CH₂-, -CH₂CH₂CH₂Si(CH₃)₂-, -CH₂CH₂CH₂Si(CH₃)(CH=CH₂)-, - CH₂CH₂CH₂Si(CH=CH₂)₂- oder eine o-, m- oder p-Silylphenylengruppe darstellt, dargestellt durch eine Strukturformel (Z'); R² ein Wasserstoffatom oder eine substituierte oder unsubstituierte einwertige Kohlenwasserstoffgruppe darstellt,
wobei die Formeln (i), (ii), (Z) und (Z') die folgenden Formeln sind: 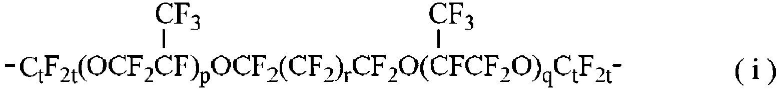
wobei jedes von p und q 0 oder eine ganze Zahl von 1 bis 150 darstellt und ein Durchschnitt einer Summe von p und q 2 bis 200 beträgt; r eine ganze Zahl von 0 bis 6 darstellt; t 2 oder 3 darstellt, 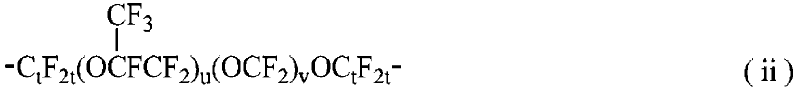
wobei u eine ganze Zahl von 1 bis 200 darstellt; v eine ganze Zahl von 1 bis 50 darstellt; t 2 oder 3 darstellt, 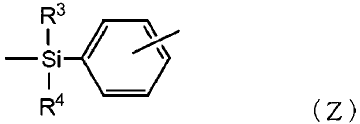
wobei jedes von R³ und R⁴ unabhängig -CH₃ oder -CH=CH₂ darstellt, 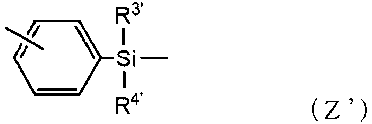
wobei jedes von R³' und R⁴' unabhängig -CH₃ oder -CH=CH₂ darstellt.

7. Beschichtungsfilmausbildungsverfahren gemäß einem der Ansprüche 1 bis 6, wobei das fluorhaltige Organowasserstoffsiloxan als die Komponente (B) in einem Molekül mindestens eine einwertige Perfluoralkylgruppe, einwertige Perfluoroxyalkylgruppe, zweiwertige Perfluoralkylengruppe und/oder zweiwertige Perfluoroxyalkylengruppe aufweist.

8. Beschichtungsfilmausbildungsverfahren gemäß einem der Ansprüche 1 bis 7, wobei der photoaktive Hydrosilylierungsreaktionsmetallkatalysator als die Komponente (C) ein (η⁵-Cyclopentadienyl)tri(σ-alkyl)platin(IV)-Komplex ist.

9. Beschichtungsfilmausbildungsverfahren gemäß einem der Ansprüche 1 bis 8, wobei die lichthärtbare Elastomerzusammensetzung auf Fluorpolyetherbasis in einem Behälter mit einem Düsenabschnitt enthalten ist und die Lichtbestrahlung an der Zusammensetzung durch den Düsenabschnitt durchgeführt wird.

## Revendications

1. Procédé de formation d'un film de revêtement pour former un film de revêtement d'une composition élastomère à base de fluoropolyéther photodurcissable, comprenant :
une étape consistant à appliquer une composition élastomère à base de fluoropolyéther photodurcissable irradiée par la lumière sur une surface d'un matériau de base,
dans lequel la composition élastomère à base de fluoropolyéther photodurcissable est appliquée sur la surface du matériau de base tout en exposant la composition élastomère à base de fluoropolyéther photodurcissable à un rayonnement lumineux,
dans lequel l'exposition à un rayonnement lumineux s'effectue avec une lumière ultraviolette dont la longueur d'onde de pic maximal se situe dans une plage de 300 à 400 nm, où la dose de rayonnement va de 100 mJ/cm² à 100 000 mJ/cm² en termes d'intensité cumulée, et
dans lequel la composition élastomère à base de fluoropolyéther photodurcissable comprend :
(A) 100 parties en masse d'un composé polyfluoré linéaire ayant au moins deux groupes alcényle dans une molécule, et ayant une structure de perfluoropolyéther dans une chaîne principale
(B) un organohydrogénosiloxane contenant du fluor ayant au moins deux atomes d'hydrogène liés à des atomes de silicium (groupes SiH) dans une molécule, le composant (B) étant utilisé en une quantité telle que les groupes SiH sont présents en une quantité de 0,5 à 3,0 moles pour 1 mole des groupes alcényle du composant (A) ; et
(C) un catalyseur métallique photoactif de réaction d'hydrosilylation, le composant (C) étant utilisé en une quantité de 0,1 à 500 ppm en termes de masse d'atomes métalliques par rapport au composant (A).

2. Procédé de formation d'un film de revêtement selon la revendication 1, dans lequel la composition élastomère à base de fluoropolyéther photodurcissable comprend en outre, en tant que composant (D),
(D) un composé polyfluoromonoalcényle ayant un groupe alcényle dans une molécule et ayant une structure de perfluoropolyéther dans une chaîne principale, le composant (D) étant utilisé en une quantité de 1 à 300 parties en masse pour 100 parties en masse du composant (A).

3. Procédé de formation d'un film de revêtement selon la revendication 1 ou la revendication 2, dans lequel la composition élastomère à base de fluoropolyéther photodurcissable comprend en outre, en tant que composant (E),
(E) au moins un composé perfluoropolyéther non fonctionnel choisi dans le groupe constitué par des composés représentés par les formules générales suivantes (1) à (3), le composant (E) étant utilisé en une quantité de 0 à 150 parties en masse pour un total de 100 parties en masse des composants (A) et (B) :
A-O-(CF₂CF₂CF₂O)ₐ-A (1)
où A représente un groupe exprimé par la formule C_{b}F_{2b+1}- (où b représente un entier de 1 à 3, a représente un entier de 1 à 500) ;
A-O-(CF₂0)_{c}-(CF₂CF₂O)_{d}-A (2)
où A est tel que défini ci-dessus, chacun de c et d représente un entier de 1 à 300 ; 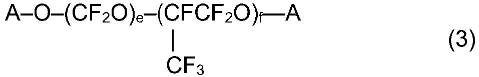 où A est tel que défini ci-dessus, e et f représentent chacun un entier de 1 à 300.

4. Procédé de formation d'un film de revêtement selon l'une quelconque des revendications 1 à 3, dans lequel la composition élastomère à base de fluoropolyéther photodurcissable comprend en outre, en tant que composant (F),
(F) une poudre de silice hydrophobe ayant une surface spécifique BET non inférieure à 0,1 m²/g, le composant (F) étant utilisé en une quantité de 0,1 à 40 parties en masse pour 100 parties en masse du composant (A).

5. Procédé de formation d'un film de revêtement selon l'une quelconque des revendications 1 à 4, dans lequel la composition élastomère à base de fluoropolyéther photodurcissable comprend en outre, en tant que composant (G), un agent de contrôle de réaction pour la réaction d'hydrosilylation.

6. Procédé de formation d'un film de revêtement selon l'une quelconque des revendications 1 à 5, dans lequel le composant (A) est un composé polyfluoré linéaire représenté par la formule (I) suivante :
CH₂=CH-(X)_{g}-Rf¹-(X')_{g}-CH=CH₂ (1)
dans laquelle X représente -CH₂-, -CH₂O-, -CH₂OCH₂- ou -Y-NR¹-CO-, X' représente -CH₂-, -OCH₂-, -CH₂OCH₂- ou -CO-NR²-Y'- ; g vaut indépendamment 0 ou 1 ; Rf¹ représente un groupe perfluoropolyéther divalent représenté par une formule (i) ou (ii), où Y représente -CH₂-, -Si(CH₃)₂CH₂CH₂CH₂-, -Si(CH₃)(CH=CH₂)CH₂CH₂-CH₂-, - Si(CH=CH₂)₂CH₂CH₂CH₂- ou un groupe o-, m- ou p-silylphénylène représenté par une formule structurale (Z) ; R¹ représente un atome d'hydrogène, ou un groupe hydrocarboné monovalent substitué ou non substitué, Y' représente -CH₂-, -CH₂CH₂-CH₂Si(CH₃)₂-, CH₂CH₂CH₂Si(CH₃)(CH=CH₂)-, -CH₂CH₂CH₂Si(CH=CH₂)₂- ou un groupe o-, m- ou p-silylphénylène représenté par une formule structurale (Z') ; R² représente un atome d'hydrogène ou un groupe hydrocarboné monovalent substitué ou non substitué,
les formules (i), (ii), (Z) et (Z') étant les formules suivantes : 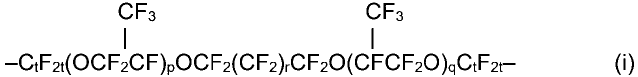 où p et q représentent chacun 0 ou un entier de 1 à 150, et une moyenne de la somme de p et q est de 2 à 200 ; r représente un entier de 0 à 6 ; t représente 2 ou 3, 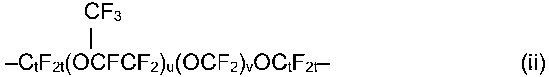 où u représente un entier de 1 à 200 ; v représente un entier de 1 à 50 ; t représente 2 ou 3, 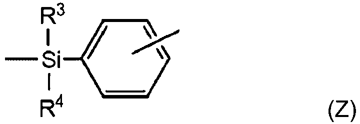 où R³ et R⁴ représentent chacun indépendamment -CH₃ ou -CH=CH₂, 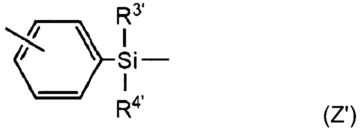 où R³' et R⁴' représentent chacun indépendamment -CH₃ ou -CH=CH₂.

7. Procédé de formation d'un film de revêtement selon l'une quelconque des revendications 1 à 6, dans lequel l'organohydrogénosiloxane contenant du fluor en tant que composant (B) a, dans une molécule, au moins un groupe perfluoroalkyle monovalent, un groupe perfluorooxyalkyle monovalent, un groupe perfluoroalkylène divalent et/ou un groupe perfluorooxyalkylène divalent.

8. Procédé de formation d'un film de revêtement selon l'une quelconque des revendications 1 à 7, dans lequel le catalyseur métallique photoactif de réaction d'hydrosilylation en tant que composant (C) est un complexe de (η⁵-cyclopentadiényl)tri(σ-alkyl)platine (IV).

9. Procédé de formation d'un film de revêtement selon l'une quelconque des revendications 1 à 8, dans lequel la composition élastomère à base de fluoropolyéther photodurcissable est contenue dans un récipient ayant une partie buse, et l'exposition de la composition au rayonnement lumineux s'effectue à travers la partie buse.
